# EUROPEAN PATENT APPLICATION

(11) **EP 3 650 406 A1**
(43) Date of publication of application: **13.05.2020**
(21) Application number: 18828304.8
(22) Date of filing: 02.07.2018
(51) Int. Cl.: C01B 3/38, H01M 8/04228, H01M 8/0612

(54) **HYDROGEN GENERATING SYSTEM AND OPERATING METHOD FOR SAME**

(30) Priority: 04.07.2017 JP 2017130906; 19.07.2017 JP 2017139629; 18.12.2017 JP 2017241284
(71) Applicant: Panasonic Intellectual Property Management Co., Ltd., Osaka-shi, Osaka 540-6207 (JP)
(72) Inventor: IIYAMA, Shigeru, Osaka-shi, Osaka 540-6207 (JP); SHIMADA, Yasuaki, Osaka-shi, Osaka 540-6207 (JP); TAGUCHI, Kiyoshi, Osaka-shi, Osaka 540-6207 (JP); ASO, Tomonori, Osaka-shi, Osaka 540-6207 (JP)
(74) Representative: Grünecker Patent- und Rechtsanwälte PartG mbB
(86) International application number: PCT/JP2018/024993
(87) International publication number: WO 2019/009224

(57) **Abstract**

In a hydrogen generating system, when at least one reformer among a plurality of reformers is to perform a stopping action to stop generation of hydrogen, a controller causes a corresponding fuel supply unit among a plurality of fuel supply units to stop a supply of a fuel to a corresponding combustor among the plurality of combustors before the stopping action is started. The controller causes the at last one reformer to perform a purge action to purge the at least one reformer using raw material after the stopping action is started, the raw material being supplied from a corresponding raw material supply unit among the plurality of raw material supply units to the at least one reformer. The controller causes one or more fuel supply units among the plurality of fuel supply units to supply gas to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and causes one or more combustors among the plurality of combustors to burn the gas, the one or more combustors corresponding to the one or more reformers.

## Description

### TECHNICAL FIELD

The present disclosure relates to a hydrogen generating system in which a plurality of hydrogen generating devices cooperates with each other to generate a hydrogen-containing gas by reforming a hydrocarbon raw material and a method for operating the hydrogen generating system.

### BACKGROUND ART

The hydrogen-containing gas used as fuel during power generation of a fuel cell is not prepared as a general infrastructure gas yet. For this reason, a fuel cell system includes the hydrogen generating device including a reformer or the hydrogen generating system in which the plurality of hydrogen generating devices cooperates with each other.

In the reformer, the hydrogen-containing gas is generated by a reforming reaction from the hydrocarbon raw material, such as a town gas, a liquefied petroleum gas, and a natural gas, which are of the general infrastructure gas.

In a steam reforming reaction that is of a typical reforming reaction in the reformer, hydrocarbon that becomes the raw material and water vapor react with each other at a high temperature of about 600°C to about 700°C using a Ni-based, Ru-based, or Rh-based reforming catalyst. Consequently, the hydrogen-containing gas mainly containing hydrogen is generated. A combustor heats the reformer because the reformer is heated to a temperature necessary for the steam reforming reaction.

An off gas, which is discharged from the reformer and contains a combustible gas that is not used in the fuel cell, and hydrocarbon are supplied as the fuel, and the fuel is burnt in the combustor.

In this kind of hydrogen generating system, when water vapor stagnates in a gas passage of the hydrogen generating device upon stopping the hydrogen generating device in, for example, a process of stopping the power generation of the fuel cell system, the water vapor is condensed due to a temperature drop, contact between a catalyst and condensed water is generated, and catalyst particles are condensed by water droplets adhering to the catalyst to degrade catalyst performance.

In the process of stopping the hydrogen generation, there is proposed a method in which after the temperature at the reforming catalyst is dropped to a temperature at which carbon deposition due to thermal decomposition of the raw material is not generated, the raw material 1 to 10 times an inner volume of the reformer is supplied to the hydrogen generating device to dilute and exhaust the water vapor in the hydrogen generating device to an outside of the fuel cell system (for example, see PTL 1).

In the conventional configuration, in the case that a hydrogen generating process of the hydrogen generating device is stopped, the hydrogen-containing gas, the raw material, and the like that are discharged from the hydrogen generating device are discharged to an atmosphere without being used in the hydrogen utilization device by raw material purge in the stopping process. For this reason, hydrogen production efficiency drops.

### Citation List

### Patent Literature

PTL 1: Japanese Patent No. 4486353

### SUMMARY OF THE INVENTION

The present disclosure prevents the drop in hydrogen production efficiency of the hydrogen generating system.

One aspect of the present disclosure is a hydrogen generating system including: a plurality of reformers that generates hydrogen-containing gas from a raw material; a plurality of raw material supply units that corresponds to the plurality of reformers to supply the raw material to the plurality of reformers; a plurality of combustors that burns fuel to heat the plurality of reformers; a plurality of fuel supply units that corresponds to the plurality of combustors to supply the fuel to the plurality of combustors; and a hydrogen supply passage through which the hydrogen-containing gas generated by the plurality of reformers is supplied to a hydrogen utilization device. The hydrogen generating system further includes: a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device; and a controller.

The controller, when at least one reformer among the plurality of reformers is to perform a stopping action to stop generation of hydrogen, causes a corresponding fuel supply unit among the plurality of fuel supply units to stop the supply of the fuel to a corresponding combustor among the plurality of combustors before the stopping action is started;, and causes the at last one reformer to perform a purge action to purge the at least one reformer using raw material after the stopping action is started, the raw material being supplied from a corresponding raw material supply unit among the plurality of raw material supply units to the at least one reformer. The controller causes one or more fuel supply units among the plurality of fuel supply units to supply gas to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and causes one or more combustors among the plurality of combustors to burn the gas, the one or more combustors corresponding to the one or more reformers.

Consequently, the gas discharged from the reformer by the purge action is used for not the fuel of the combustor of the reformer that currently perform the purge action, but the fuel of the combustor corresponding to at least one standby reformer or the reformer in which the heating is required. Consequently, the temperature at the reformer that currently performs the purge action does not rise, and the reformer that currently performs the purge action can be stopped in a short time, whereby the stopping time of the hydrogen generating system can be shortened.

Another aspect of the present disclosure is a method for operating a hydrogen generating system including: a plurality of reformers that generates hydrogen-containing gas from a raw material; a plurality of raw material supply units that corresponds to the plurality of reformers to supply the raw material to the plurality of reformers; a plurality of combustors that burns fuel to heat the plurality of reformers; a plurality of fuel supply units that corresponds to the plurality of combustors to supply the fuel to the plurality of combustors; and a hydrogen supply passage through which the hydrogen-containing gas generated by the plurality of reformers is supplied to a hydrogen utilization device. In the method for operating the hydrogen generating system, the hydrogen generating system further includes a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device.

The method for operating the hydrogen generating system includes when at least one reformer among the plurality of reformers is to perform a stopping action to stop generation of hydrogen, stopping the supply of the fuel from a corresponding fuel supply unit among the plurality of fuel supply units to a corresponding combustor among the plurality of combustors before the stopping action is started.

The method for operating the hydrogen generating system includes performing a purge action to purge the at least one reformer using raw material after the stopping action is started, the raw material being supplied from a corresponding raw material supply unit among the plurality of raw material supply units to the at least one reformer.

The method for operating the hydrogen generating system includes supplying gas from one or more fuel supply units among the plurality of fuel supply units to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and burning the gas using one or more combustors among the plurality of combustors, the one or more combustors corresponding to the one or more reformers.

Consequently, the gas discharged from the reformer by the purge action is used for not the fuel of the combustor of the reformer that currently perform the purge action, but the fuel of the combustor corresponding to at least one standby reformer or the reformer in which the heating is required. Consequently, the temperature at the reformer that currently performs the purge action does not rise, and the reformer that currently performs the purge action can be stopped in a short time, whereby the stopping time of the hydrogen generating system can be shortened.

Consequently, the gas discharged by the raw material purge from the hydrogen generating device that currently performs the stopping process of stopping the supply of the fuel from the fuel supply unit to the combustor is used for part of the fuel of the combustor of another hydrogen generating device without being discharged to the atmosphere.

Thus, the raw material used for the raw material purge can be reused as the heat source of the other hydrogen generating device without waste, the drop in hydrogen production efficiency of the hydrogen generating system can be prevented, and the highly economical hydrogen generating system can be provided.

### BRIEF DESCRIPTION OF DRAWINGS

FIG. 1 is a block diagram illustrating a schematic configuration of a hydrogen generating system according to a first exemplary embodiment of the present disclosure.
FIG. 2 is a flowchart illustrating operation from termination of a hydrogen generating process of the hydrogen generating system to a standby process through a stopping process in the first exemplary embodiment of the present disclosure.
FIG. 3 is a block diagram illustrating a schematic configuration of a hydrogen generating system according to a second exemplary embodiment of the present disclosure.
FIG. 4 is a flowchart illustrating the process of stopping the hydrogen generating system of the second exemplary embodiment of the present disclosure.
FIG. 5 is a block diagram illustrating a schematic configuration of a hydrogen generating system according to a third exemplary embodiment of the present disclosure.
FIG. 6 is a flowchart illustrating the process of stopping the hydrogen generating device of the third exemplary embodiment of the present disclosure.

### DESCRIPTION OF EMBODIMENTS

A first aspect of the present disclosure is a hydrogen generating system including: a plurality of reformers that generates hydrogen-containing gas from a raw material; a plurality of raw material supply units that corresponds to the plurality of reformers to supply the raw material to the plurality of reformers; a plurality of combustors that burns fuel to heat the plurality of reformers; a plurality of fuel supply units that corresponds to the plurality of combustors to supply the fuel to the plurality of combustors; and a hydrogen supply passage through which the hydrogen-containing gas generated by the plurality of reformers is supplied to a hydrogen utilization device. The hydrogen generating system further includes: a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device; and a controller.

The controller, when at least one reformer among the plurality of reformers is to perform a stopping action to stop generation of hydrogen, causes a corresponding fuel supply unit among the plurality of fuel supply units to stop the supply of the fuel to a corresponding combustor among the plurality of combustors before the stopping action is started, and causes the at last one reformer to perform a purge action to purge the at least one reformer using raw material after the stopping action is started, the raw material being supplied from a corresponding raw material supply unit among the plurality of raw material supply units to the at least one reformer. The controller causes one or more fuel supply units among the plurality of fuel supply units to supply gas to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and causes one or more combustors among the plurality of combustors to burn the gas, the one or more combustors corresponding to the one or more reformers..

Consequently, the gas discharged from the reformer by the purge action is used for not the fuel of the combustor of the reformer that currently perform the purge action, but the fuel of the combustor corresponding to the at least another standby reformer or the reformer in which the heating is required. Consequently, the temperature at the reformer that currently performs the purge action does not rise, and the reformer that currently performs the purge action can be stopped in a short time, whereby the stopping time of the hydrogen generating system can be shortened.

A second aspect of the present disclosure is a method for operating a hydrogen generating system including: a plurality of reformers that generates hydrogen-containing gas from a raw material; a plurality of raw material supply units that corresponds to the plurality of reformers to supply the raw material to the plurality of reformers; a plurality of combustors that burns fuel to heat the plurality of reformers; a plurality of fuel supply units that corresponds to the plurality of combustors to supply the fuel to the plurality of combustors; and a hydrogen supply passage through which the hydrogen-containing gas generated by the plurality of reformers is supplied to a hydrogen utilization device. In the method for operating the hydrogen generating system, the hydrogen generating system further includes a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device.

The method for operating the hydrogen generating system includes when at least one reformer among the plurality of reformers is to perform a stopping action to stop generation of hydrogen, stopping the supply of the fuel from a corresponding fuel supply unit among the plurality of fuel supply units to a corresponding combustor among the plurality of combustors before the stopping action is started.

The method for operating the hydrogen generating system includes performing a purge action to purge the at least one reformer using raw material after the stopping action is started, the raw material being supplied from a corresponding raw material supply unit among the plurality of raw material supply units to the at least one reformer.

The method for operating the hydrogen generating system includes supplying gas from one or more fuel supply units among the plurality of fuel supply units to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and burning the gas using one or more combustors among the plurality of combustors, the one or more combustors corresponding to the one or more reformers.

Consequently, the gas discharged from the reformer by the purge action is used for not the fuel of the combustor of the reformer that currently perform the purge action, but the fuel of the combustor corresponding to the at least another standby reformer or the reformer in which the heating is required. Consequently, the temperature at the reformer that currently performs the purge action does not rise, and the reformer that currently performs the purge action can be stopped in a short time, whereby the stopping time of the hydrogen generating system can be shortened.

A third aspect of the present disclosure is a hydrogen generating system in which a plurality of hydrogen generating devices is connected in parallel, each of the hydrogen generating devices including: a reformer that generates a hydrogen-containing gas from a raw material; a raw material supply unit that supplies the raw material to the reformer; a combustor that burns fuel to heat the reformer; and a fuel supply unit that supplies the fuel to the combustor.

Each of the plurality of hydrogen generating devices includes: a hydrogen supply passage through which the hydrogen-containing gas discharged from each of the plurality of hydrogen generating devices is supplied to a hydrogen utilization device; a fuel supply passage through which the hydrogen-containing gas discharged from the hydrogen utilization device without being utilized in the hydrogen utilization device is distributed and supplied to the fuel supply unit as the fuel; and a bypass passage through which the hydrogen-containing gas discharged from each of the plurality of hydrogen generating devices is mixed in the fuel before being distributed to the fuel supply unit.

The hydrogen generating system includes a switching unit that selectively switches between the supply of the hydrogen-containing gas discharged from each of the plurality of hydrogen generating devices to the hydrogen utilization device through the hydrogen supply passage without being mixed in the fuel through the bypass passage and the mixing of the hydrogen-containing gas discharged from each of the plurality of hydrogen generating devices in the fuel through the bypass passage without being supplied to the hydrogen utilization device.

While at least one hydrogen generating device among the plurality of hydrogen generating devices stops the supply of the fuel from the fuel supply unit to the combustor to perform a stopping process including raw material purge, at least another hydrogen generating device except for the at least one hydrogen generating device among the plurality of hydrogen generating devices performs a combustion action to burn the fuel supplied from the fuel supply unit using the combustor. Gas discharged from the at least one hydrogen generating device is mixed in the fuel of the at least another hydrogen generating device through the bypass passage using the switching unit by the raw material purge.

With this configuration, the switching unit mixes the gas discharged from the hydrogen generating device in the fuel through the bypass passage by the raw material purge during the stopping process of stopping the supply of the fuel from the fuel supply unit to the combustor, and the gas is used for part of the fuel of the combustor of the at least another hydrogen generating device.

Thus, the gas discharged by the raw material purge from the hydrogen generating device that currently performs the stopping process of stopping the supply of the fuel from the fuel supply unit to the combustor is used for part of the fuel of the combustor of another hydrogen generating device without being discharged to the atmosphere. Consequently, the raw material used for the raw material purge can be reused as the heat source of another hydrogen generating device without waste, the drop in hydrogen production efficiency can be prevented, and the highly economical hydrogen generating system can be provided.

A fourth aspect of the present disclosure may further include a controller. The controller may perform the following action while the at least one hydrogen generating device among the plurality of hydrogen generating devices performs a first action to supply the raw material from the raw material supply unit to the reformer that is not heated by the combustor because the fuel is not supplied from the fuel supply unit to the combustor.

The controller may cause the at least another hydrogen generating device except for the at least one hydrogen generating device that performs the first action among the plurality of hydrogen generating devices to perform a second action to supply the raw material from the raw material supply unit to the reformer heated by the combustor that burns the fuel supplied from the fuel supply unit.

The controller may mix the gas discharged from the at least one hydrogen generating device that performs the first action in the fuel of the at least another hydrogen generating device through the bypass passage.

With this configuration, the gas discharged from the hydrogen generating device that performs the first action in the fuel through the bypass passage using the switching unit, and the gas is used for part of the fuel of the combustor of at least another hydrogen generating device that performs the second action except for the hydrogen generating device that performs the first action in the plurality of hydrogen generating devices.

Consequently, in the hydrogen generating device that performs the first action in order to stop the hydrogen generation, the controller stops the fuel supply unit before the first action is performed, which allows the combustion in the combustor to be stopped to drop the temperature at the reformer. The hydrogen-containing gas remaining in the hydrogen generating device that currently performs the first action is discharged by supplying the raw material to the reformer of the hydrogen generating device, the combustion in the combustor being stopped to progress the drop in temperature at the reformer.

The gas discharged from the hydrogen generating device that currently performs the first action is burnt by the combustor of at least one hydrogen generating device that currently performs the second action that is of the action to continue the hydrogen generation, and used as the heat source for the reforming reaction.

Thus, the combustible gas discharged from the hydrogen generating device that currently performs the first action (stopping process) is used for part of the fuel of the combustor of another hydrogen generating device that performs the second action (hydrogen generating process) without being discharged to an atmosphere. Consequently, the discharged raw material can be reused as the heat source for the reforming reaction of another hydrogen generating device without waste, the drop in hydrogen production efficiency can be prevented, and the highly economical hydrogen generating system can be provided.

Also when at least one hydrogen generating device is in the stopping process (when the hydrogen-containing gas cannot be supplied to the hydrogen utilization device), the hydrogen-containing gas generated by at least another hydrogen generating device can be supplied to the hydrogen utilization device.

In a fifth aspect of the present disclosure, the switching unit may include a first hydrogen generating device outlet valve provided downstream of a branching point of the bypass passage in the hydrogen supply passage and a second hydrogen generating device outlet valve provided in the bypass passage.

Upstream of the fuel supply passage that is branched into the plurality of pieces corresponding to the fuel supply units downstream of the fuel supply passage may be connected to a hydrogen-containing gas discharge port of the hydrogen utilization device through one common fuel supply passage.

The bypass passage may communicate with the common fuel supply passage downstream of the bypass passage with respect to the second hydrogen generating device outlet valve.

The controller may control the hydrogen generating device that currently performs the first action such that the fuel supply unit is in a stopping state, such that the first hydrogen generating device outlet valve is in a closed state, and such that the second hydrogen generating device outlet valve is in an open state. The controller may control the hydrogen generating device that currently performs the second action such that the fuel supply unit is in an operating state, such that the first hydrogen generating device outlet valve is in the open state, and such that the second hydrogen generating device outlet valve is in the closed state.

With this configuration, when the first hydrogen generating device outlet valve is in the open state while the second hydrogen generating device outlet valve is in the closed state, the gas discharged from the hydrogen generating device can be supplied to the hydrogen utilization device through the hydrogen supply passage without being mixed in the fuel flowing in the common fuel supply passage through the bypass passage. Conversely, when the first hydrogen generating device outlet valve is in the closed state while the second hydrogen generating device outlet valve is in the open state, the gas discharged from the hydrogen generating device can be mixed in the fuel flowing in the common fuel supply passage through the bypass passage without being supplied to the hydrogen utilization device through the hydrogen supply passage.

Thus, the first hydrogen generating device outlet valve and the second hydrogen generating device outlet valve having above configurations can construct the switching unit that can be controlled by the controller.

A sixth aspect of the present disclosure is a method for operating a hydrogen generating system in which a plurality of hydrogen generating devices is connected in parallel, each of the hydrogen generating devices including: a reformer that generates a hydrogen-containing gas from a raw material; a raw material supply unit that supplies the raw material to the reformer; a combustor that burns fuel to heat the reformer; and a fuel supply unit that supplies the fuel to the combustor.

Each of the plurality of hydrogen generating systems includes: a hydrogen supply passage through which the hydrogen-containing gas discharged from each of the plurality of hydrogen generating devices is supplied to a hydrogen utilization device; a fuel supply passage through which the hydrogen-containing gas discharged from the hydrogen utilization device as the fuel without being utilized in the hydrogen utilization device is distributed and supplied to the fuel supply unit as the fuel; and a bypass passage through which the hydrogen-containing gas discharged from each of the plurality of hydrogen generating devices is mixed in the fuel before being distributed to the fuel supply unit.

Each of the plurality of hydrogen generating devices includes a switching unit that selectively switches between the supply of the hydrogen-containing gas discharged from each of the plurality of hydrogen generating devices to the hydrogen utilization device through the hydrogen supply passage without being mixed in the fuel through the bypass passage and the mixing of the hydrogen-containing gas discharged from each of the plurality of hydrogen generating devices in the fuel through the bypass passage without being supplied to the hydrogen utilization device.

The method for operating the hydrogen generating system includes performing a combustion action to burn the fuel supplied from the fuel supply unit using the combustor in at least another hydrogen generating device except for the at least one hydrogen generating device among the plurality of hydrogen generating devices while at least one hydrogen generating device among the plurality of hydrogen generating devices stops the supply of the fuel from the fuel supply unit to the combustor to perform a stopping process including raw material purge.

The method for operating the hydrogen generating system includes mixing gas discharged from the at least one hydrogen generating device by the raw material purge in the fuel through the bypass passage using the switching unit.

Through the operating method, in the hydrogen generating system, the switching unit mixes the gas discharged from the hydrogen generating device in the fuel through the bypass passage by the raw material purge during the stopping process of stopping the supply of the fuel from the fuel supply unit to the combustor, and the gas is used for part of the fuel of the combustor of at least another hydrogen generating device.

Thus, the gas discharged from the hydrogen generating device by the raw material purge in performing the stopping process while the supply of the fuel from the fuel supply unit to the combustor is stopped is used as part of the fuel for the combustor of another hydrogen generating device without being discharged to the atmosphere, so that the raw material used for the raw material purge can be reused as a heat source for another hydrogen generating device without waste, the drop in hydrogen production efficiency can be prevented, and the method for operating the highly economical hydrogen generating system can be provided.

A seventh aspect of the present disclosure is a hydrogen generating system in which a plurality of hydrogen generating devices is connected in parallel, each of the hydrogen generating device including: a reformer that generates a hydrogen-containing gas from a raw material; and a raw material supply unit that supplies the raw material to the reformer.

Each of the plurality of hydrogen generating devices includes a recycle passage through which the hydrogen-containing gas discharged from each of the plurality of hydrogen generating devices is mixed in the raw material supplied to the raw material supply unit.

Each of the plurality of hydrogen generating devices includes a switching unit that selectively switches between the supply of the hydrogen-containing gas discharged from each of the plurality of hydrogen generating devices to the hydrogen utilization device without being mixed in the fuel through the recycle passage and the mixing of the hydrogen-containing gas discharged from each of the plurality of hydrogen generating devices in the fuel through the recycle passage without being supplied to the hydrogen utilization device.

Gas discharged by raw material purge from the hydrogen generating device that currently performs a stopping process among the plurality of hydrogen generating devices is mixed in the raw material using the switching unit.

In the hydrogen generating system having the above configuration, the gas discharged by the raw material purge from the hydrogen generating device that currently performs the stopping process is mixed in the raw material upstream of the raw material supply unit using the switching unit.

Thus, the gas discharged from the hydrogen generating device by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and the highly economical hydrogen generating system can be provided.

In an eighth aspect of the present disclosure, while at least one hydrogen generating device among the plurality of hydrogen generating devices mixes gas discharged by the raw material purge during the stopping process in the raw material using the switching unit, at least another hydrogen generating device except for the at least one hydrogen generating device among the plurality of hydrogen generating devices may supply the hydrogen-containing gas generated by the reformer to the hydrogen utilization device using the switching unit.

In the hydrogen generating system having the above configuration, while at least one hydrogen generating device mixes the gas discharged from the hydrogen generating device by the raw material purge during the stopping process in the raw material located upstream of the raw material supply unit, at least another hydrogen generating device supplies the hydrogen-containing gas generated by the reformer to the hydrogen utilization device.

Thus, the gas discharged from the hydrogen generating device by the raw material purge during the stopping process is mixed in the raw material located upstream of the raw material supply unit, and is used as part of the raw material for the reforming reaction of at least another hydrogen generating device. Consequently, the raw material used for the raw material purge can be reused as the raw material for the reforming reaction without waste, the drop in hydrogen production efficiency can be prevented, and the highly economical hydrogen generating system can be provided.

Also when at least one hydrogen generating device performs the raw material purge in the stopping process (when the hydrogen-containing gas cannot be supplied to the hydrogen utilization device), the hydrogen-containing gas generated by at least another hydrogen generating device can be supplied to the hydrogen utilization device.

A ninth aspect the present disclosure may further include a controller. The controller may cause the hydrogen generating device that currently performs the stopping process among the plurality of hydrogen generating devices to perform a purge action using the raw material supplied from the raw material supply unit. The controller may switch the switching unit of the hydrogen generating device before the purge action such that the gas discharged from the hydrogen generating device during the stopping process is mixed in the raw material through the recycle passage without being supplied to the hydrogen utilization device.

In the hydrogen generating system having the above configuration, when the controller controls the plurality of hydrogen generating devices and the plurality of switching units, the hydrogen generating device that performs the stopping process performs the purge action using the raw material supplied from the raw material supply unit, and the gas discharged from the hydrogen generating device that currently performs the stopping process is mixed in the raw material located upstream of the raw material supply unit by the purge action.

Thus, the gas discharged from the hydrogen generating device by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and the highly economical hydrogen generating system can be provided.

In a tenth aspect of the present disclosure, the controller may cause the hydrogen generating device that performs the stopping process among the plurality of hydrogen generating devices to perform the purge action using the raw material supplied from the raw material supply unit. The controller may switch the switching unit of the hydrogen generating device before the purge action such that gas discharged by the purge action is mixed in the raw material through the recycle passage without being supplied to the hydrogen utilization device. While at least one hydrogen generating device among the plurality of hydrogen generating devices mixes the gas discharged from the hydrogen generating device by the raw material purge during the stopping process in the raw material using the switching unit, the controller may perform the following processes. The controller may cause the at least another hydrogen generating device except for the at least one hydrogen generating device among the plurality of hydrogen generating devices to generate the hydrogen-containing gas from the raw material supplied from the raw material supply unit using the reformer. The controller may supply the hydrogen-containing gas to the hydrogen utilization device using the switching unit.

In the hydrogen generating system having the above configuration, when the controller controls the plurality of hydrogen generating devices and the plurality of switching units, the hydrogen generating device that performs the stopping process performs the purge action using the raw material supplied from the raw material supply unit, and the gas discharged from the hydrogen generating device that currently performs the stopping process is mixed in the raw material located upstream of the raw material supply unit by the purge action, and used as part of the raw material for the reforming reaction of at least another hydrogen generating device. Consequently, the raw material used for the raw material purge can be reused as the raw material for the reforming reaction without waste, the drop in hydrogen production efficiency can be prevented, and the highly economical hydrogen generating system can be provided.

When at least one hydrogen generating device performs the raw material purge in the stopping process (when the hydrogen-containing gas cannot be supplied to the hydrogen utilization device), the hydrogen-containing gas generated by at least another hydrogen generating device can be supplied to the hydrogen utilization device.

In an eleventh aspect of the present disclosure, each of the plurality of hydrogen generating devices may further include a hydrogen supply passage that supplies the hydrogen-containing gas discharged from each of the hydrogen generating devices to the hydrogen utilization device. The switching unit may include a first hydrogen generating device outlet valve that opens and closes downstream of a branching point of the recycle passage in the hydrogen supply passage and a second hydrogen generating device outlet valve that opens and closes the recycle passage. When the gas discharged from the hydrogen generating device is supplied to the hydrogen utilization device without being mixed in the raw material through the recycle passage, the first hydrogen generating device outlet valve may be in an open state, and the second hydrogen generating device outlet valve may be in a closed state. When the gas discharged from the hydrogen generating device is mixed in the raw material through the recycle passage without being supplied to the hydrogen utilization device, the first hydrogen generating device outlet valve may be in the closed state, and the second hydrogen generating device outlet valve may be in the open state.

Consequently, the first hydrogen generating device outlet valve that opens and closes downstream of the branching point of the recycle passage in the hydrogen supply passage that supplies the hydrogen-containing gas discharged from the hydrogen generating device to the hydrogen utilization device and the second hydrogen generating device outlet valve that opens and closes the recycle passage are provided. When the gas discharged from the hydrogen generating device is supplied to the hydrogen utilization device without being mixed in the raw material through the recycle passage, the first hydrogen generating device outlet valve is in the open state, and the second hydrogen generating device outlet valve is in the closed state. When the gas discharged from the hydrogen generating device is mixed in the raw material through the recycle passage without being supplied to the hydrogen utilization device, the first hydrogen generating device outlet valve is in the closed state, and the second hydrogen generating device outlet valve is in the open state. This enables the construction of the switching unit.

A twelfth aspect of the present disclosure is a method for operating a hydrogen generating system in which a plurality of hydrogen generating devices is connected in parallel, each of the hydrogen generating devices including: a reformer that generates a hydrogen-containing gas from a raw material; and a raw material supply unit that supplies the raw material to the reformer.

Each of the plurality of hydrogen generating devices includes a recycle passage through which the hydrogen-containing gas discharged from each of the plurality of hydrogen generating devices is mixed in the raw material supplied to the raw material supply unit.

Each of the plurality of hydrogen generating devices includes a switching unit that selectively switches between the supply of the hydrogen-containing gas discharged from each of the plurality of hydrogen generating devices to the hydrogen utilization device without being mixed in the fuel through the recycle passage and the mixing of the hydrogen-containing gas discharged from each of the plurality of hydrogen generating devices in the fuel through the recycle passage without being supplied to the hydrogen utilization device.

The method for operating hydrogen generating system includes mixing gas discharged by raw material purge from the hydrogen generating device that currently performs a stopping process among the plurality of hydrogen generating devices in the raw material using the switching unit.

By the method for operating the hydrogen generating system, the gas discharged by the raw material purge from the hydrogen generating device that currently performs the stopping process is mixed in the raw material upstream of the raw material supply unit using the switching unit.

Thus, the gas discharged from the hydrogen generating device by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and the method for operating the highly economical hydrogen generating system can be provided.

In a thirteenth aspect of the present disclosure, while at least one hydrogen generating device among the plurality of hydrogen generating devices mixes gas discharged by the raw material purge during the stopping process in the raw material using the switching unit, the following process may be performed. That is, the method for operating the hydrogen generating system may further include suppling the hydrogen-containing gas generated by the reformer to the hydrogen utilization device using the switching unit in at least another hydrogen generating device except for the at least one hydrogen generating device among the plurality of hydrogen generating devices.

By the method for operating the hydrogen generating system, in the hydrogen generating system, while at least one hydrogen generating device mixes the gas discharged from the hydrogen generating device by the raw material purge during the stopping process in the raw material located upstream of the raw material supply unit, at least another hydrogen generating device supplies the hydrogen-containing gas generated by the reformer to the hydrogen utilization device.

Thus, the gas discharged from the hydrogen generating device by the raw material purge during the stopping process is mixed in the raw material located upstream of the raw material supply unit, and is used as part of the raw material for the reforming reaction of at least another hydrogen generating device. Consequently, the raw material used for the raw material purge can be reused as the raw material for the reforming reaction without waste, the drop in hydrogen production efficiency can be prevented, and the method for operating the highly economical hydrogen generating system can be provided.

When at least one hydrogen generating device performs the raw material purge in the stopping process (when the hydrogen-containing gas cannot be supplied to the hydrogen utilization device), the hydrogen-containing gas generated by at least another hydrogen generating device can be supplied to the hydrogen utilization device.

Hereinafter, exemplary embodiments of the present disclosure will be described with reference to the drawings.

### (First exemplary embodiment)

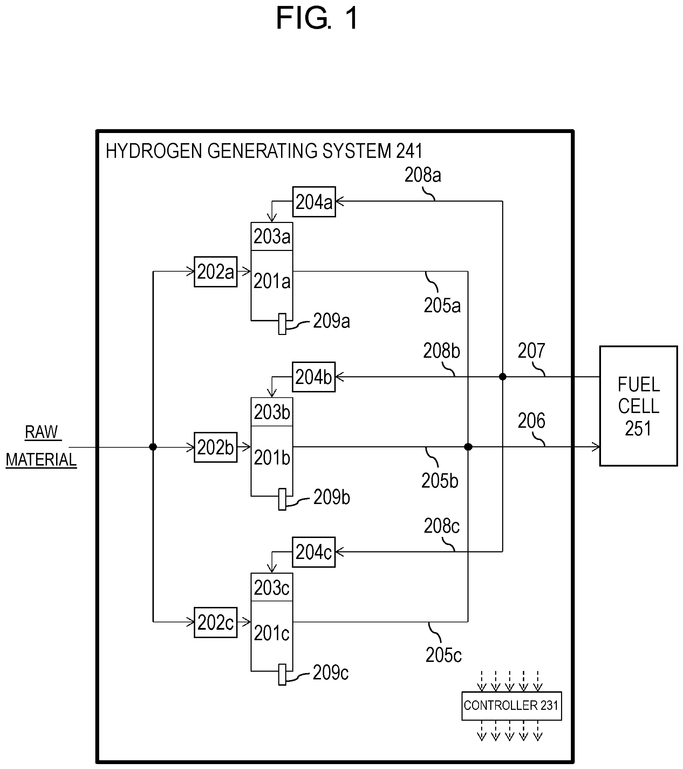

FIG. 1 is a block diagram illustrating a schematic configuration of hydrogen generating system 241 according to a first exemplary embodiment of the present disclosure.

As illustrated in FIG. 1, hydrogen generating system 241 of the present exemplary embodiment includes reformers 201a to 201c that generate a hydrogen-containing gas from a raw material and raw material supply units 202a to 202c that correspond to reformer 201a to 201c, respectively, and supply the raw material to reformers 201a to 201c.

Hydrogen generating system 241 includes combustors 203a to 203c that burns fuel to heat reformers 201a to 201c and fuel supply units 204a to 204c that correspond to combustor 203a to 203c, respectively, and supply the fuel to combustors 203a to 203c.

Hydrogen generating system 241 includes hydrogen supply passages 205a to 205c and common hydrogen supply passage 206 through which the hydrogen-containing gas generated by reformers 201a to 201c are supplied to fuel cell 251 as a hydrogen utilization device. Hydrogen generating system 241 includes common fuel supply passage 207 and fuel supply passages 208a to 208c through which the hydrogen-containing gas unused in fuel cell 251 among the hydrogen-containing gas generated by reformers 201a to 201c is distributed and supplied as the fuel to fuel supply units 204a to 204c.

Hydrogen generating system 241 includes reformer temperature detectors 209a to 209c that detect internal temperatures of reformers 201a to 201c and controller 231 that controls hydrogen generating system 241.

At this point, suffixes of reference marks of these components are common to second and third exemplary embodiments. The suffix "a" of the reference mark, for example, reformer 201a is used in the case of designating a first reformer, reformer 201b is used in the case of designating a second reformer, and reformer 201c is used in the case of designating a third reformer.

Thus, the description of reformers 201a to 201c designates three reformers of the first to third reformers. Sometimes the description of any reformer is simply referred to as reformer 201.

The same holds true for other components.

Reformers 201a to 201c generate the hydrogen-containing gas by a reforming reaction using a hydrocarbon system raw material and water vapor. In the present exemplary embodiment, a town gas mainly containing methane is used as the raw material. The steam reforming reaction that reacts the raw material with the water vapor is used as the reforming reaction of the present exemplary embodiment. A reforming catalyst (not illustrated) is loaded in reformers 201a to 201c. A water supply unit that supplies water (water vapor) to reformers 201a to 201c also exists, but is not illustrated in FIG. 1.

Raw material supply unit 202a is a pump that supplies the raw material to reformer 201a. Raw material supply unit 202b is a pump that supplies the raw material to reformer 201b. Raw material supply unit 202c is a pump that supplies the raw material to reformer 201c.

Raw material supply units 202a to 202c are configured so as not to supply the raw material to reformers 201a to 201c when raw material supply units 202a to 202c do not perform a raw material supply action.

Combustor 203a mixes the fuel and air with each other to perform combustion, thereby heating reformer 201a. Combustor 203b mixes the fuel and air with each other to perform combustion, thereby heating reformer 201b. Combustor 203c mixes the fuel and air with each other to perform combustion, thereby heating reformer 201c. An anode off-gas (at least one of the raw material and the hydrogen-containing gas) discharged from an anode of fuel cell 251 is used as the fuel for combustor 203a to 203c.

Fuel supply unit 204a is a pump that supplies the fuel to combustor 203a, and is installed on fuel supply passage 208a. Fuel supply unit 204b is a pump that supplies the fuel to combustor 203b, and is installed on fuel supply passage 208b. Fuel supply unit 204c is a pump that supplies the fuel to combustor 203c, and is installed on fuel supply passage 208c.

Fuel supply units 204a to 204c are configured so as not to supply the fuel to combustors 203a to 203c when fuel supply units 204a to 204c do not perform a fuel supply action.

Hydrogen supply passage 205a is a passage through which the hydrogen-containing gas discharged from reformer 201a is supplied to the anode of fuel cell 251. Hydrogen supply passage 205b is a passage through which the hydrogen-containing gas discharged from reformer 201b is supplied to the anode of fuel cell 251. Hydrogen supply passage 205c is a passage through which the hydrogen-containing gas discharged from reformer 201c is supplied to the anode of fuel cell 251.

Common hydrogen supply passage 206 is a passage through which the hydrogen-containing gas discharged from the downstream ends of hydrogen supply passages 205a to 205c are supplied to the anode of fuel cell 251 while merged together.

Common fuel supply passage 207 is a passage through which the anode off-gas (hydrogen-containing gas) discharged from the anode of fuel cell 251 without being utilized in fuel cell 251 is distributed and supplied to fuel supply passages 208a to 208c.

Fuel supply passage 208a is a passage through which the anode off-gas (hydrogen-containing gas) discharged from a downward end of common fuel supply passage 207 to combustor 203a. Fuel supply passage 208b is a passage through which the anode off-gas (hydrogen-containing gas) discharged from the downward end of common fuel supply passage 207 to combustor 203b. Fuel supply passage 208c is a passage through which the anode off-gas (hydrogen-containing gas) discharged from the downward end of common fuel supply passage 207 to combustor 203c.

Reformer temperature detector 209a is a thermocouple that detects an internal temperature of reformer 201a. Reformer temperature detector 209b is a thermocouple that detects an internal temperature of reformer 201b. Reformer temperature detector 209c is a thermocouple that detects an internal temperature of reformer 201c.

Controller 231 controls operation of hydrogen generating system 241. Controller 231 includes a signal input and output unit (not illustrated), an arithmetic processor (not illustrated), and storage (not illustrated) in which a control program is stored. The control program is read in the arithmetic processor, and executed to perform later-described processes.

In fuel cell 251, electric power is taken out (power generation is performed) by an electrochemical reaction from the hydrogen-containing gas supplied from hydrogen generating system 241 and oxygen in air.

An action and effect of hydrogen generating system 241 of the present exemplary embodiment having the above configuration will be described below. Controller 231 controls raw material supply unit 202a to 202c and fuel supply unit 204a to 204c of hydrogen generating system 241 to perform the following action.

The action of hydrogen generating system 241 will be described with reformer 201a as an example. The action of reformer 201a includes a standby process, a starting process, a hydrogen generating process, and a stopping process, and the action of reformer 201a is performed in this order.

The standby process is a process in which a temperature at reformer 201a is kept near an ordinary temperature. In the standby process, both raw material supply unit 202a and fuel supply unit 204a do not operate. Raw material supply unit 202a and fuel supply unit 204a do not operate because raw material supply unit 202a and fuel supply unit 204a maintains the standby process until controller 231 transmits a starting instruction.

The starting process is a process of heating reformer 201a to a temperature at which hydrogen can be generated. At beginning of the starting process, controller 231 transmits the starting instruction to raw material supply unit 202a and fuel supply unit 204a.

When raw material supply unit 202a is operated, after the raw material is supplied to reformer 201a and discharged from reformer 201a, the raw material passes through hydrogen supply passage 205a, common hydrogen supply passage 206, fuel cell 251, common fuel supply passage 207, and fuel supply passage 208a.

The raw material passing through fuel supply passage 208a is supplied to combustor 203a and burnt by operating fuel supply unit 204a (mixed with air separately supplied to combustor 203a), and combustor 203a heats reformer 201a to a predetermined temperature under the control of controller 231.

At this point, the predetermined temperature of reformer 201a means a temperature at which the hydrogen-containing gas containing hydrogen having concentration necessary for the power generation in fuel cell 251 is generated from the raw material by the reforming reaction, and the predetermined temperature of reformer 201a is set to 600°C in the present exemplary embodiment. The starting process is completed at a time point when controller 231 determines that the temperature at reformer 201a reaches 600°C by a detection temperature of reformer temperature detector 209a, and the action of reformer 201a transitions to the hydrogen generating process.

The hydrogen generating process is a process of stably and continuously supplying the hydrogen-containing gas generated from the raw material using reformer 201a to the anode of fuel cell 251.

Controller 231 operates fuel supply unit 204a to control the temperature at reformer 201a such that an amount of hydrogen generated by reformer 201a is enough to be consumed by fuel cell 251. Specifically, while monitoring the internal temperature of reformer 201a detected by reformer temperature detector 209a, controller 231 controls a flow rate of the fuel supplied by fuel supply unit 204a such that the internal temperature of reformer 201a becomes the predetermined temperature (about 600°C).

Similarly, controller 231 controls the flow rate of the raw material supplied by raw material supply unit 202a such that the flow rate of the fuel necessary for fuel supply unit 204a can be supplied to fuel supply unit 204a. Raw material supply unit 202a and fuel supply unit 204a perform the hydrogen generating process until controller 231 transmits an instruction of transition to the stopping process.

The stopping process is a process of performing purge action to purge reformer 201a using the raw material supplied by raw material supply unit 202a while dropping reformer 201a from a temperature at which hydrogen having the concentration necessary for the power generation in fuel cell 251 can be generated from the raw material by the reforming reaction to a temperature near an ordinary temperature. When the purge action is terminated, reformer 201a stops the action of raw material supply unit 202a to transition to the standby process.

Because action contents of reformer 201b and reformer 201c are identical to those of reformer 201a, the description will be omitted. In this case, the reference mark described in the component is performed such that "raw material supply unit 2a" is replaced with "raw material supply unit 2b", for example. Reformer 201c holds the standby state.

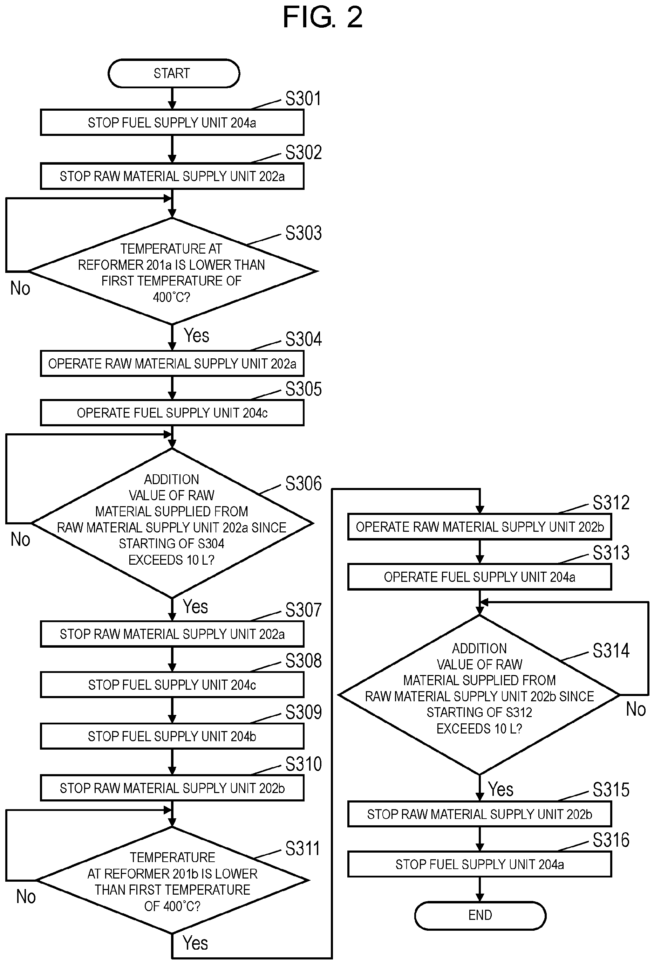

An action from the termination of the hydrogen generating process of hydrogen generating system 241 to the standby process through the stopping process will be described below with reference to FIG. 2.

FIG. 2 is a flowchart illustrating the action from termination of a hydrogen generating process of hydrogen generating system 241 to a standby process through a stopping process in the first exemplary embodiment of the present disclosure.

In the case that at least one reformer 201 currently performs the standby process, the stopping process is performed by another reformer 201. In the present exemplary embodiment, it is assumed that, before the stopping process is started, reformer 201a and reformer 201b currently perform the hydrogen generating process and reformer 201c currently performs the standby process.

Controller 231 initially causes reformer 201a to perform the stopping process. Controller 231 causes reformer 201b to continuously perform the hydrogen generating process. Controller 231 causes reformer 201c to continuously perform the standby process.

Controller 231 stops fuel supply unit 204a to stop the combustion in combustor 203a in order that the internal temperature of reformer 201a is dropped from the temperature at which hydrogen having the concentration necessary for the power generation in fuel cell 251 can be generated from the raw material by the reforming reaction to the temperature near the ordinary temperature (step S301).

At the same time, controller 231 stops raw material supply unit 202a to stop the supply of the raw material to reformer 201a in order to stop the hydrogen generation in reformer 201a (step S302).

Subsequently, controller 231 acquires the internal temperature of reformer 201a from reformer temperature detector 209a to compare the internal temperature to a first temperature (step S303). When the internal temperature of reformer 201a is lower than the first temperature (YES in step S303), the action transitions to step S304.

On the other hand, when the internal temperature of reformer 1a is not lower than the first temperature (NO in step S303), step S303 is repeatedly performed. As used herein, the first temperature means a temperature at which carbon deposition of the raw material in reformer 201a is hardly generated. In the present exemplary embodiment, the first temperature is set to 400°C.

Subsequently, controller 231 operates raw material supply unit 202a in order to perform the purge action to purge reformer 201a using the raw material supplied from raw material supply unit 202a (step S304).

Controller 231 operates fuel supply unit 204c such that gas discharged from reformer 201a in the purge action is used as the fuel to be burnt by combustor 203c of reformer 201c that currently performs the standby process. At the same time, controller 231 operates an air supply unit (not illustrated) of combustor 203c, and ignites an igniter (not illustrated) of combustor 203c for a predetermined time to burn the gas discharged from reformer 201a in the purge action using combustor 203c (step S305).

Subsequently, controller 231 adds up a volume of the raw material supplied after the action of raw material supply unit 202a is started in step S304, and the action transitions to step S307 when the volume of the raw material exceeds double of a volume of reformer 201a (YES in step S306).

On the other hand, until the volume of the raw material exceeds the double of the volume of reformer 201a (NO in step S306), step S306 is repeatedly performed.

As used herein, the double of the volume of reformer 201a means a volume of the raw material necessary for completion of the discharge of the hydrogen-containing gas remaining in reformer 201a and the replacement to the raw material, the volume being previously experimentally obtained. In the present exemplary embodiment, the double of the volume of reformer 201a is set to 10 L (see FIG. 2). The flow rate of the raw material supplied from raw material supply unit 202a to reformer 201a is set to 1 L/min.

At this point, 1 L/min is a flow rate that becomes a combustion amount in which reformer 201c does not become overheating when the hydrogen-containing gas discharged from reformer 201a is supplied to and burnt in combustor 203c through fuel cell 251 by the action of raw material supply unit 202a, and 1 L/min is previously experimentally obtained.

Subsequently, controller 231 stops the action of raw material supply unit 202a (step S307). At the same time, controller 231 stops the action of fuel supply unit 204c (step S308).

Reformer 201a terminates the stopping process through the above action, and the action transitions to the standby process. At this point, reformer 201b currently performs the hydrogen generating process and reformer 201c currently performs the standby process.

After the action transitions to the standby process of reformer 201a, controller 231 performs the control to cause reformer 201b to transition to the stopping process.

Controller 231 stops fuel supply unit 204b to stop the combustion in combustor 203b in order that the internal temperature of reformer 201b is dropped from the temperature at which hydrogen having the concentration necessary for the power generation in fuel cell 251 can be generated from the raw material by the reforming reaction to the temperature near the ordinary temperature (step S309).

At the same time, controller 231 stops raw material supply unit 202b to stop the supply of the raw material to reformer 201b in order to stop the hydrogen generation in reformer 201b (step S310).

Subsequently, controller 231 acquires the internal temperature of reformer 201b from reformer temperature detector 209b to compare the internal temperature to the first temperature. When the internal temperature of reformer 201b is lower than the first temperature (YES in step S311), the action transitions to step S312.

On the other hand, when the internal temperature of reformer 201b is not lower than the first temperature (NO in step S311), step S311 is repeatedly performed. The first temperature is one described in step S303, and the first temperature is set to 400°C.

Subsequently, controller 231 operates raw material supply unit 202b in order to perform the purge action to purge reformer 201b using the raw material supplied from raw material supply unit 202b (step S312).

At this point, controller 231 operates fuel supply unit 204a such that the gas (at least one of the raw material and the hydrogen-containing gas) discharged from reformer 201b is supplied to and burnt in combustor 203a of reformer 201a that currently performs the standby process by the purge action of reformer 201b. At the same time, controller 231 operates the air supply unit (not illustrated) of combustor 203a, and ignites the igniter (not illustrated) of combustor 203a for a predetermined time to burn the gas discharged from reformer 201b in the purge action using combustor 203a (step S313).

Subsequently, controller 231 adds up the volume of the raw material supplied after the action of raw material supply unit 202b is started in step S312, and the action transitions to step S315 when the volume of the raw material exceeds the double of the volume of reformer 201b (YES in step S314). On the other hand, until the volume of the raw material exceeds the double of the volume of reformer 201b (NO in step S314), step S114 is repeatedly performed.

As used herein, the double of the volume of reformer 201b is a volume of the raw material necessary for completion of the discharge of the hydrogen-containing gas remaining in reformer 201b and the replacement to the raw material, the volume being previously experimentally obtained. In the present exemplary embodiment, the double of the volume of reformer 201b is set to 10 L (see FIG. 2). The flow rate of the raw material supplied from raw material supply unit 202b to reformer 201b is set to 1 L/min.

At this point, 1 L/min is a flow rate that becomes the combustion amount in which reformer 201a does not become the overheating when the hydrogen-containing gas discharged from reformer 201b is supplied to combustor 203a through fuel cell 251 and burnt in combustor 203a by the action of raw material supply unit 202b, and 1 L/min is previously experimentally obtained.

Subsequently, controller 231 stops the action of raw material supply unit 202b (step S315). At the same time, controller 231 stops the action of fuel supply unit 204a (step S316).

Through the above action, reformer 201b terminates the stopping process to transition to the standby process, so that all reformers 201a to 201c currently perform the standby process to terminate the whole action from the termination of the hydrogen generating process of hydrogen generating system 241 to the standby process through the stopping process.

As described above, hydrogen generating system 241 of the present exemplary embodiment includes the plurality of reformers 201a to 201c that generates the hydrogen-containing gas from the raw material and the plurality of raw material supply units 202a to 202c that corresponds to the plurality of reformer 201a to 201c, respectively, and supply the raw material to the plurality of reformers 201a to 201c.

Hydrogen generating system 241 includes the plurality of combustors 203a to 203c that burns the fuel to heat the plurality of reformers 201a to 201c and the plurality of fuel supply units 204a to 204c that corresponds to the plurality of combustor 203a to 203c, respectively, and supply the fuel to the plurality of combustors 203a to 203c.

Hydrogen generating system 241 includes hydrogen supply passages 205a to 205c and common hydrogen supply passage 206 through which the hydrogen-containing gas generated by the plurality of reformers 201a to 201c is supplied to fuel cell 251 as the hydrogen utilization device. Hydrogen generating system 241 includes common fuel supply passage 207 and the plurality of fuel supply passages 208a to 208c through which the hydrogen-containing gas unused in fuel cell 251 among the hydrogen-containing gas generated by the plurality of reformers 201a to 201c is distributed and supplied as the fuel to the plurality of fuel supply units 204a to 204c, and controller 231.

Before the stopping process is started, controller 231 causes reformer 201 that stops the hydrogen generating action to stop the supply of the fuel to combustor 203 from fuel supply unit 204 corresponding to reformer 201 that stops the hydrogen generating action. After the stopping process is started, controller 231 causes reformer 201 that stops the hydrogen generating action to perform the purge action to purge reformer 201 using the raw material supplied from raw material supply unit 202 corresponding to reformer 201 that stops the hydrogen generating action. With the gas discharged from reformer 201 by the purge action after the stopping process is started as the fuel, controller 231 supplies the fuel to combustor 203 from fuel supply unit 204 corresponding to at least one standby reformer 201, and causes combustor 203 corresponding to another one standby reformer 201 to perform the combustion action.

Consequently, the gas discharged from reformer 201 by the purge action is used for not the fuel of combustor 203 of reformer 201 that currently perform the purge action, but the fuel of combustor 203 corresponding to at least another standby reformer 201. Thus, the temperature at reformer 201 that currently performs the purge action does not rise, but reformer 201 that currently performs the purge action can be stopped in a short time, and a stopping time of hydrogen generating system 241 can be shortened.

In the present exemplary embodiment, the stopping process is started from reformer 201a. However, the stopping process may be performed in any order as long as at least one reformer 201 currently performs the standby process.

In the present exemplary embodiment, reformer 201 installed in hydrogen generating system 241 is reformer 201a, reformer 201b, and reformer 201c. However, at least two reformers 201 may be installed in hydrogen generating system 241.

In the present exemplary embodiment, the stopping process is performed in each reformer 201. Alternatively, the flow rate of the raw material purge is set to the experimentally-acquired flow rate at which reformer 201 that performs the standby process does not become the overheating, or a large amount of combustion air is charged than the usual to prevent the temperature rise of reformer 201 by the combustion, which allows a number of reformers 201 that perform the stopping process to be larger than a number of reformers 201 that currently perform the standby process.

In the present exemplary embodiment, the gas discharged from reformer 201 by the purge action is continuously burnt by combustor 203 of one reformer 201 that currently performs the standby process. Alternatively, the gas discharged from reformer 201 by the purge action is sequentially or alternately burnt by combustors 203 of at least two reformers 201 that currently perform the standby process.

In the present exemplary embodiment, reformer 201 includes the reforming catalyst. Alternatively, a CO decreasing catalyst may be included in a subsequent stage of the reforming catalyst.

In the present exemplary embodiment, fuel cell 251 is used as the hydrogen utilization device. Alternatively, a hydrogen refining machine that increases a hydrogen concentration using a hydrogen separation membrane, such as a palladium thin film, which extracts hydrogen from the hydrogen-containing gas may be used as the hydrogen utilization device.

In the present exemplary embodiment, with the gas discharged from reformer 201 by the purge action after the stopping process is started as the fuel, controller 231 supplies the fuel to combustor 203 from fuel supply unit 204 corresponding to at least another standby reformer 201, and causes combustor 203 corresponding to at least another standby reformer 201 to perform the combustion action. The present disclosure is not limited to the first exemplary embodiment. Alternatively, with the gas discharged from reformer 201 by the purge action after the stopping process is started as the fuel, the fuel may be supplied to combustor 203 from fuel supply unit 204 corresponding to at least another reformer 201 (in which the heating is required) heated by combustor 203 during the starting process or the hydrogen generating process. The combustion action to burn the fuel may be performed by combustor 203 corresponding to at least another reformer 201 (in which the heating is required) heated by combustor 203 during the starting process or the hydrogen generating process.

In this case, the gas discharged from reformer 201 by the purge action is used for not the fuel of combustor 203 of reformer 201 that currently perform the purge action, but the fuel of combustor 203 corresponding to at least another reformer 201 in which heating is required. Consequently, the temperature at reformer 201 that currently performs the purge action does not rise, and reformer 201 that currently performs the purge action can be stopped in a short time, and the stopping time of hydrogen generating system 241 can be shortened.

It is clear from the above description of the present exemplary embodiment that those skilled in the art can make modifications and other exemplary embodiments of the present disclosure. Thus, the above description should be interpreted as only illustration, and is intended to teach the best mode carrying out the present disclosure to those skilled in the art. The details of at least one of the structure and the function can substantially be changed without departing from the spirit of the present disclosure.

### (Second exemplary embodiment)

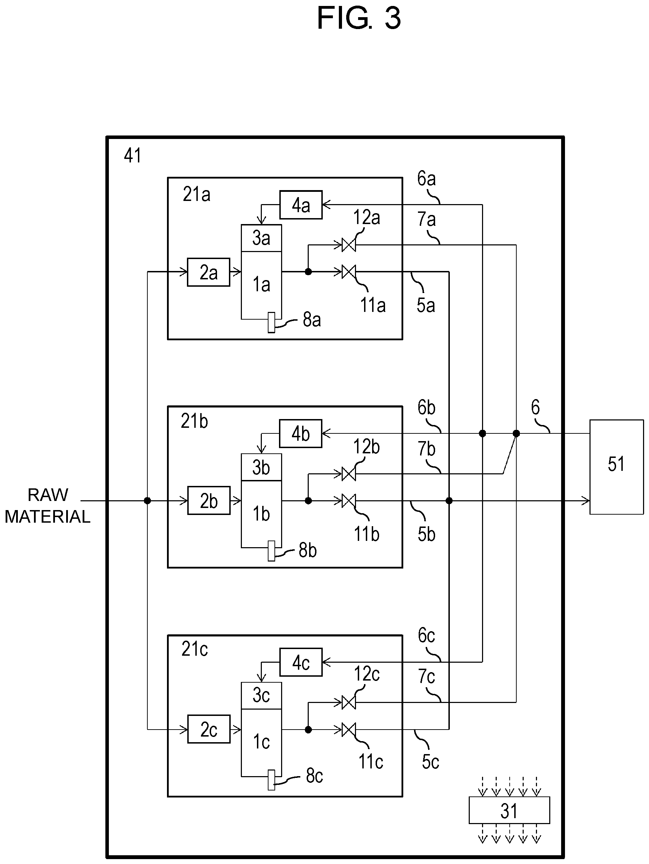

FIG. 3 is a block diagram illustrating a schematic configuration of hydrogen generating system 41 according to a second exemplary embodiment of the present disclosure.

As illustrated in FIG. 3, controller 31 controls hydrogen generating system 41 of the second exemplary embodiment. In hydrogen generating system 41, a plurality (in the present exemplary embodiment, three) of hydrogen generating devices 21a, 21b, 21c are connected in parallel in fuel cell 51 as the hydrogen utilization device.

Hydrogen generating devices 21a, 21b, 21c include reformers 1a, 1b, 1c, raw material supply units 2a, 2b, 2c that supply the raw material to reformers 1a, 1b, 1c, combustors 3a, 3b, 3c that burn the fuel to heat reformers 1a, 1b, 1c, and fuel supply units 4a, 4b, 4c that supply the fuel to combustors 3a, 3b, 3c, respectively.

Hydrogen generating devices 21a, 21b, 21c include reformer temperature detectors 8a, 8b, 8c that detect the temperatures at reformers 1a, 1b, 1c, and first hydrogen generating device outlet valves 11a, 11b, 11c and second hydrogen generating device outlet valves 12a, 12b, 12c as a switching unit that switches passages of the gas discharged from reformers 1a, 1b, 1c, respectively.

Hydrogen generating devices 21a, 21b, 21c include first hydrogen generating device outlet valves 11a, 11b, 11c and hydrogen supply passages 5a, 5b, 5c through which the hydrogen-containing gas discharged from reformers 1a, 1b, 1c are supplied to fuel cell 51, respectively. Hydrogen generating devices 21a, 21b, 21c include fuel supply passages 6a, 6b, 6c that are branched from common fuel supply passage 6 to distribute and supply the fuel to fuel supply units 4a, 4b, 4c, respectively, the hydrogen-containing gas discharged from fuel cell 51 passing through fuel supply passages 6a, 6b, 6c.

Hydrogen generating devices 21a, 21b, 21c include second hydrogen generating device outlet valves 12a, 12b, 12c and bypass passages 7a, 7b, 7c through which hydrogen supply passages 5a, 5b, 5c between outlets of reformers 1a, 1b, 1c and first hydrogen generating device outlet valves 11a, 11b, 11c communicate with common fuel supply passage 6.

The suffixes of the reference marks of these components will be described with reformers 1a to 1c as an example. The suffix "a" of the mark, for example, reformer 1a is used in the case of designating a first reformer, reformer 1b is used in the case of designating a second reformer, and reformer 1c is used in the case of designating a third reformer.

Thus, the description of reformers 1a to 1c designates three reformers of the first to third reformers. Sometimes the description of any reformer is simply referred to as reformer 1.

The same holds true for other components.

Reformers 1a to 1c generate the hydrogen-containing gas by the reforming reaction using the hydrocarbon system raw material and water vapor. In the present exemplary embodiment, the town gas mainly containing methane is used as the raw material. The water vapor reforming reaction that reacts the raw material with the water vapor is used as the reforming reaction of the present exemplary embodiment. The reforming catalyst (not illustrated) is loaded in reformers 1a to 1c. The water supply unit that supplies water (water vapor) to reformers 1a to 1c also exists, but is not illustrated in FIG. 3.

Raw material supply unit 2a is a pump that supplies the raw material to reformer 1a, and can stop the supply of the raw material to reformer 1a by stopping raw material supply unit 2a. Raw material supply unit 2b is a pump that supplies the raw material to reformer 1b, and can stop the supply of the raw material to reformer 1b by stopping raw material supply unit 2b. Raw material supply unit 2c is a pump that supplies the raw material to reformer 1c, and can stop the supply of the raw material to reformer 1c by stopping raw material supply unit 2c.

Combustor 3a burns the fuel to heat reformer 1a. Combustor 3b burns the fuel to heat reformer 1b. Combustor 3c burns the fuel to heat reformer 1c. The hydrogen-containing gas discharged from reformers 1a to 1c (hydrogen generating devices 21a to 21c), the raw material, or a mixed gas of the hydrogen-containing gas and the raw material is used as the fuel of combustors 3a to 3c.

Fuel supply unit 4a is a pump that supplies the fuel to combustor 3a, and is installed on fuel supply passage 6a. The supply of the fuel to combustor 3a can be stopped by stopping fuel supply unit 4a. Fuel supply unit 4b is a pump that supplies the fuel to combustor 3b, and is installed on fuel supply passage 6b. The supply of the fuel to combustor 3b can be stopped by stopping fuel supply unit 4b. Fuel supply unit 4c is a pump that supplies the fuel to combustor 3c, and is installed on fuel supply passage 6c. The supply of the fuel to combustor 3c can be stopped by stopping fuel supply unit 4c.

Hydrogen supply passage 5a is a passage through which the hydrogen-containing gas discharged from reformer 1a is supplied to the anode of fuel cell 51. Hydrogen supply passage 5b is a passage through which the hydrogen-containing gas discharged from reformer 1b is supplied to the anode of fuel cell 51. Hydrogen supply passage 5c is a passage through which the hydrogen-containing gas discharged from reformer 1c is supplied to the anode of fuel cell 51.

Common fuel supply passage 6 is a passage through which the hydrogen-containing gas discharged from the anode of fuel cell 51 without being utilized in fuel cell 51 is distributed and supplied to fuel supply passages 6a to 6c.

Fuel supply passage 6a is a passage through which the hydrogen-containing gas discharged from the downward end of common fuel supply passage 6 is supplied to combustor 3a through fuel supply unit 4a. Fuel supply passage 6b is a passage through which the hydrogen-containing gas discharged from the downward end of common fuel supply passage 6 is supplied to combustor 3b through fuel supply unit 4b. Fuel supply passage 6c is a passage through which the hydrogen-containing gas discharged from the downward end of common fuel supply passage 6 is supplied to combustor 3c through fuel supply unit 4c.

Bypass passage 7a is a passage that is branched from a middle (between reformer 1a and first hydrogen generating device outlet valve 11a) of hydrogen supply passage 5a to communicate with common fuel supply passage 6. Bypass passage 7b is a passage that is branched from a middle (between reformer 1b and first hydrogen generating device outlet valve 11b) of hydrogen supply passage 5b to communicate with common fuel supply passage 6. Bypass passage 7c is a passage that is branched from a middle (between reformer 1c and first hydrogen generating device outlet valve 11c) of hydrogen supply passage 5c to communicate with common fuel supply passage 6.

Reformer temperature detector 8a is a thermocouple that detects an internal temperature of reformer 1a. Reformer temperature detector 8b is a thermocouple that detects an internal temperature of reformer 1b. Reformer temperature detector 8c is a thermocouple that detects an internal temperature of reformer 1c.

First hydrogen generating device outlet valve 11a is an electromagnetic valve that is located on hydrogen supply passage 5a to supply the gas discharged from reformer 1a to fuel cell 51. First hydrogen generating device outlet valve 11b is an electromagnetic valve that is located on hydrogen supply passage 5b to supply the gas discharged from reformer 1b to fuel cell 51. First hydrogen generating device outlet valve 11c is an electromagnetic valve that is located on hydrogen supply passage 5c to supply the gas discharged from reformer 1c to fuel cell 51.

Second hydrogen generating device outlet valve 12a is an electromagnetic valve that is located on bypass passage 7a to supply the gas discharged from reformer 1a as the fuel to common fuel supply passage 6. Second hydrogen generating device outlet valve 12b is an electromagnetic valve that is located on bypass passage 7b to supply the gas discharged from reformer 1b as the fuel to common fuel supply passage 6. Second hydrogen generating device outlet valve 12c is an electromagnetic valve that is located on bypass passage 7c to supply the gas discharged from reformer 1c as the fuel to common fuel supply passage 6.

Controller 31 controls operation of hydrogen generating system 41. Controller 31 includes a signal input and output unit (not illustrated), an arithmetic processor (not illustrated), and a storage (not illustrated) in which a control program is stored. The control program is read in the arithmetic processor, and executed to perform later-described processes.

In fuel cell 51, the electric power is obtained by the electrochemical reaction from hydrogen supplied from hydrogen generating system 41 and oxygen in air.

The action and effect of hydrogen generating system 41 having the above configuration will be described below. Controller 31 controls hydrogen generating device 21a to 21c of hydrogen generating system 41 to perform the following action.

The action of hydrogen generating system 41 will be described with hydrogen generating device 21a as an example. The action of hydrogen generating device 21a includes the standby process, the starting process, the hydrogen generating process, and the stopping process, and the action of hydrogen generating device 21a is performed in this order.

The standby process is a process in which the temperature at reformer 1a of hydrogen generating device 21a is kept near the ordinary temperature.

Both raw material supply unit 2a and fuel supply unit 4a of hydrogen generating device 21a are not operated in the standby process. That is, the raw material is not supplied to reformer 1a, and the fuel is not supplied to combustor 3a. Both first hydrogen generating device outlet valve 11a and second hydrogen generating device outlet valve 12a are in a closed state. Hydrogen generating device 21a holds the state of the standby process until controller 31 transmits the starting instruction.

The starting process is a process of heating reformer 1a of hydrogen generating device 21a to the temperature at which hydrogen can be generated. At a beginning of the starting process, controller 31 transmits a signal instructing hydrogen generating device 21a to start, second hydrogen generating device outlet valve 12a is set in an open state, raw material supply unit 2a is operated, and the raw material is supplied to common fuel supply passage 6 through reformer 1a, bypass passage 7a, and second hydrogen generating device outlet valve 12a.

At this point, the raw material is not supplied to fuel cell 51 through hydrogen supply passage 5a because first hydrogen generating device outlet valve 11a maintains the closed state.

Subsequently, the raw material supplied to common fuel supply passage 6 through bypass passage 7a is supplied to combustor 3a through fuel supply passage 6a by operating fuel supply unit 4a included in hydrogen generating device 21a. The raw material is burnt by ignited combustor 3a, and combustor 3a heats reformer 1a such that reformer 1a becomes a predetermined temperature.

The predetermined temperature of reformer 1a is a temperature suitable for the reforming reaction. In the present exemplary embodiment, the predetermined temperature is set to 600°C. At a time point when reformer 1a reaches 600°C, controller 31 closes second hydrogen generating device outlet valve 12a while opening first hydrogen generating device outlet valve 11a, thereby forming a passage from reformer 1a to common fuel supply passage 6 through hydrogen supply passage 5a and fuel cell 51. The action transitions to the hydrogen generating process after the starting process are completed.

The hydrogen generating process is a process of supplying the hydrogen-containing gas generated from the raw material by hydrogen generating device 21a (reformer 1a) to fuel cell 51. In the hydrogen generating process, first hydrogen generating device outlet valve 11a is in the open state, second hydrogen generating device outlet valve 12a is in the closed state, and the raw material is supplied from raw material supply unit 2a to reformer 1a heated by combustor 3a. Combustor 3a turns the fuel supplied from fuel supply unit 4a.

Hydrogen generating device 21a holds the hydrogen generating process until controller 31 transmits the instruction of the transition to the stopping process. As used herein, the second action means the hydrogen generating process.

The stopping process is a process of cooling reformer 1a of hydrogen generating device 21a from the temperature at which hydrogen can be generated to the temperature near the ordinary temperature. In the stopping process, second hydrogen generating device outlet valve 12a is opened while closing first hydrogen generating device outlet valve and the supply of the fuel from fuel supply unit 4a to combustor 3a is stopped. At this point, the raw material is supplied from raw material supply unit 2a to reformer 1a, and the hydrogen-containing gas and the water vapor that remain in hydrogen generating device 21a is discharged by the raw material (raw material purge is performed). Hydrogen generating device 21a transitions to the standby process when the stopping process is terminated. As used herein, the first action is action of the stopping process including the raw material purge.

After hydrogen generating device 21a transitions from the standby process to the hydrogen generating process through the starting process, controller 31 performs the control to cause hydrogen generating device 21b and hydrogen generating device 21c that currently perform the standby process to sequentially transition from the standby process to the hydrogen generating process through the starting process.

For each of hydrogen generating device 21b and hydrogen generating device 21c, the action of the standby process, the starting process, and the hydrogen generating process is identical to the action of hydrogen generating device 21a. Because the action contents of hydrogen generating device 21b and hydrogen generating device 21c are identical to the action content of hydrogen generating device 21a, the description will be omitted.

In this case, the reference marks described in the component and step are performed such that "second hydrogen generating device outlet valve 12a" is replaced with "second hydrogen generating device outlet valve 12b" or "second hydrogen generating device outlet valve 12c", for example.

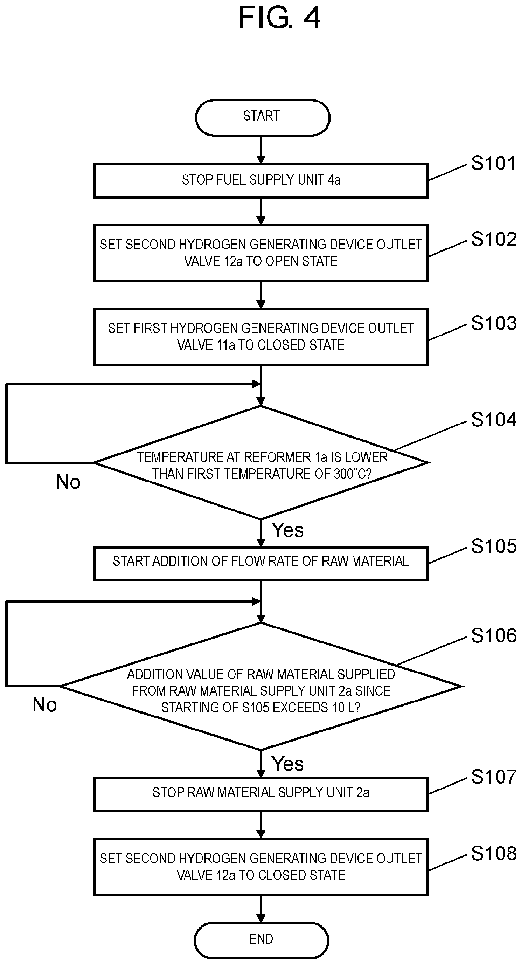

FIG. 4 is a flowchart illustrating the process of stopping the hydrogen generating system of the second exemplary embodiment of the present disclosure.

The process of stopping hydrogen generating device 21a will be described with reference to FIG. 4.

Hydrogen generating device 21a to 21c perform the second action (hydrogen generating process) before the process of stopping hydrogen generating device 21a is started. Controller 31 performs the first action (the action of the stopping process including the raw material purge) during the process of stopping hydrogen generating device 21a. On the other hand, controller 31 causes hydrogen generating device 21b and hydrogen generating device 21c to continue the second action (hydrogen generating process).

When controller 31 transmits the instruction of the transition to the stopping process, in order to drop the temperature at reformer 1a to stop the hydrogen-containing gas generating action, hydrogen generating device 21a stops the action of fuel supply unit 4a to stop the supply of the fuel to combustor 3a, and stops the heating of reformer 1a by the combustion of combustor 3a (S101).

Subsequently, second hydrogen generating device outlet valve 12a is set in the open state in order to supply the hydrogen-containing gas discharge from reformer 1a and the raw material to combustor 3b of hydrogen generating device 21b and combustor 3c of hydrogen generating device 21c (S102).

Subsequently, first hydrogen generating device outlet valve 11a is set in the closed state in order to stop the supply of the hydrogen-containing gas discharge from reformer 1a and the raw material to fuel cell 51 (S103).

When step S103 is completed, the hydrogen-containing gas and the raw material are mixed in the fuel flowing from reformer 1a to common fuel supply passage 6 through bypass passage 7a, and the first action is started.

When the first action is started in hydrogen generating device 21a, in hydrogen generating device 21b and hydrogen generating device 21c that currently perform the second action, the hydrogen-containing gas and the raw material that are discharged from hydrogen generating device 21a can be used as part of the fuel to be burnt in combustor 3b and combustor 3c.

Subsequently, controller 31 acquires the internal temperature of reformer 1a from reformer temperature detector 8a to compare the internal temperature to the first temperature. When the internal temperature of reformer 1a is lower than the first temperature (YES in step S104), the action transitions to step S105. On the other hand, when the internal temperature of reformer 1a is not lower than the first temperature (NO in step S104), step S104 is repeatedly performed. As used herein, the first temperature means a temperature at which the reforming reaction is hardly generated in reformer 1a. In the present exemplary embodiment, the first temperature is set to 300°C.

When the internal temperature of reformer 1a becomes lower than the first temperature in step S104, the addition of the flow rate of the raw material is started (S105).

Whether the volume of the amount of flowing raw material supplied by raw material supply unit 2a exceeds triple of the volume of reformer 1a since the action in step S105 is started is determined in step S106. When the volume of the flow rate of the raw material exceeds the triple of the volume of reformer 1a (YES in S106), the action transitions to step S107. Until the volume of the amount of flowing raw material exceeds the triple of the volume of reformer 1a (NO in S106), step S106 is repeatedly performed.

As used herein, the "triple of the volume of reformer 1a" means a volume of the raw material necessary for the completion of the discharge of the hydrogen-containing gas from reformer 1a and the replacement to the raw material, the volume being previously experimentally obtained. In the present exemplary embodiment, the triple of the volume of reformer 1a is set to 10 L (see FIG. 4). The flow rate of the raw material supplied from raw material supply unit 2a to reformer 1a is set to 1 L/min.

At this point, 1 L/min is a flow rate that becomes the combustion amount in which reformer 1b and reformer 1c do not become the overheating when the hydrogen-containing gas discharged from reformer 1a by the action of raw material supply unit 2a and the hydrogen-containing gas discharged from fuel cell 51 is mixed by common fuel supply passage 6 and supplied to and burnt in combustor 3b and combustor 3c. 1 L/min is previously experimentally obtained.

When the addition value of the raw material exceeds the triple of the volume of reformer 1a in step S106, raw material supply unit 2a is stopped (S107). The supply of the raw material to reformer 1a is stopped in step S107, so that the first action is terminated. Subsequently, second hydrogen generating device outlet valve 12a becomes the closed state (S108).

Through the above action, the process of stopping hydrogen generating device 21a is terminated, and hydrogen generating device 21a transitions to the standby process.

After the transition of hydrogen generating device 21a to the standby process, controller 31 performs the control to cause hydrogen generating device 21b to transition to the stopping process. After the transition of hydrogen generating device 21b to the stopping process, the action from step S101 to step S108, which are described above, is performed on hydrogen generating device 21b. Because the action content is identical to that of hydrogen generating device 21a, the description will be omitted.

In this case, the reference marks described in the component and step are performed such that "second hydrogen generating device outlet valve 12a" is replaced with "second hydrogen generating device outlet valve 12b", for example.

In the case that hydrogen generating device 21b is caused to perform the stopping process while hydrogen generating device 21a is in the standby process, the hydrogen-containing gas discharged from hydrogen generating device 21b is supplied only to combustor 3c of hydrogen generating device 21c that currently performs the hydrogen generating process.

As described above, in hydrogen generating system 41 of the present exemplary embodiment, fuel supply unit 4 of hydrogen generating device 21 in the hydrogen generation stopping process is stopped. Consequently, the combustion of combustor 3 is stopped, and the temperature at reformer 1 is dropped. At the same time, the hydrogen-containing gas remaining in hydrogen generating device 21 is discharged by supplying the raw material to hydrogen generating device 21 that currently performs the stopping process.

The hydrogen-containing gas discharged from hydrogen generating device 21 that currently performs the stopping process is burnt by combustor 3 of at least one hydrogen generating device 21 that currently performs the hydrogen generating process, and used as the heat source for the reforming reaction.

Consequently, the process of stopping hydrogen generating device 21 that currently performs the stopping process can be performed without dropping the hydrogen production efficiency of hydrogen generating system 41.

As described above, hydrogen generating system 41 of the present exemplary embodiment includes reformers 1a, 1b, 1c that generate the hydrogen-containing gas from the raw material, raw material supply units 2a, 2b, 2c that supply the raw material to reformers 1a, 1b, 1c, combustors 3a, 3b, 3c that burn the fuel to heat reformers 1a, 1b, 1c, fuel supply units 4a, 4b, 4c that supply the fuel to combustors 3a, 3b, 3c, and the plurality (for example, three) of hydrogen generating devices 21a, 21b, 21c connected in parallel.

Hydrogen generating system 41 includes hydrogen supply passages 5a, 5b, 5c that supply the hydrogen-containing gas discharged from the plurality of hydrogen generating devices 21a, 21b, 21c (reformers 1a, 1b, 1c) to the hydrogen utilization device (fuel cell 51), fuel supply passages 6a, 6b, 6c that distributes and supplies the hydrogen-containing gas discharged from the hydrogen utilization device without being utilized by the hydrogen utilization device to the plurality of fuel supply units 4a, 4b, 4c as the fuel, and common fuel supply passage 6.

Hydrogen generating system 41 includes bypass passages 7a, 7b, 7c that are separately provided in the plurality of hydrogen generating devices 21a, 21b, 21c to mix the gas discharged from hydrogen generating devices 21a, 21b, 21c (reformers 1a, 1b, 1c) in the fuel flowing in common fuel supply passage 6 before the gas is distributed to the plurality of fuel supply units 4a, 4b, 4c.

Hydrogen generating system 41 includes the switching unit that is separately provided in each of the plurality of hydrogen generating devices 21 to selectively select which one of the supply of the gas discharged from hydrogen generating device 21 (reformer 1) to the hydrogen utilization device using hydrogen supply passage 5 without being mixed in the fuel through bypass passage 7 or the mixing of the gas discharged from hydrogen generating device 21 (reformer 1) in the fuel flowing in common fuel supply passage 6 through the bypass passage without being supplied to the hydrogen utilization device.

An example of the switching unit is first hydrogen generating device outlet valves 11b, 11c and second hydrogen generating device outlet valves 12a, 12b, 12c.

While at least one hydrogen generating device 21 stops the supply of the fuel from fuel supply unit 4 to combustor 3 to perform the stopping process including the raw material purge, at least another hydrogen generating device 21 performs the combustion action to burn the fuel supplied from fuel supply unit 4 using combustor 3.

The switching unit mixes the gas discharged from hydrogen generating device 21 (reformer 1) in the fuel through bypass passage 7 by the raw material purge during the stopping process.

In hydrogen generating system 41, the switching unit mixes the gas discharged from hydrogen generating device 21 (reformer 1) in the fuel through bypass passage 7 by the raw material purge during the stopping process of stopping the supply of the fuel from fuel supply unit 4 to combustor 3, and the gas is used for part of the fuel of combustor 3 of at least another hydrogen generating device 21.

Thus, the gas discharged from hydrogen generating device 21 (reformer 1) is used for part of the fuel of combustor 3 of another hydrogen generating device 21 by the raw material purge during the stopping process of stopping the supply of the fuel from fuel supply unit 4 to combustor 3 without being discharged to the atmosphere.

Consequently, the raw material used for the raw material purge can be reused as the heat source of another hydrogen generating device 21 without waste, the drop in hydrogen production efficiency can be prevented, and highly economical hydrogen generating system 41 can be provided.

In hydrogen generating system 41 of the present exemplary embodiment, while at least one hydrogen generating device 21 performs the first action, controller 31 causes at least another hydrogen generating device 21 to perform the second action.

The first action is an action to supply the raw material from raw material supply unit 2 to reformer 1 that is not heated by combustor 3 because the fuel is not supplied from fuel supply unit 4 to combustor 3.

The second action is an action to supply the raw material from raw material supply unit 2 to reformer 1 that is heated by combustor 3a that burns the fuel supplied from fuel supply unit 4.

At the same time, controller 31 mixes the gas discharged from hydrogen generating device 21 (reformer 1) that currently performs the first action in the fuel through bypass passage 7 by the switching unit (first hydrogen generating device outlet valve 11 and second hydrogen generating device outlet valve 12).

In hydrogen generating system 41 having the above configuration, the switching unit mixes the gas discharged from hydrogen generating device 21 (reformer 1) in the fuel through bypass passage 7, and the gas is used for part of the fuel of combustor 3 of at least another hydrogen generating device 21 that currently performs the second action.

In hydrogen generating device 21 that performs the first action in order to stop the hydrogen generation, controller 31 stops fuel supply unit 4 before the first action is performed, which allows the combustion in combustor 3 to be stopped to drop the temperature at reformer 1.

The hydrogen-containing gas remaining in hydrogen generating device 21 (reformer 1) that currently performs the first action is discharged by supplying the raw material to reformer 1 of hydrogen generating device 21, the drop in temperature at reformer 1 progressing due to stoppage of the combustion in combustor 3.

The gas discharged from hydrogen generating device 21 (reformer 1) that currently performs the first action is burnt by combustor 3 of at least one hydrogen generating device 21 that currently performs the second action that is of the action to continue the hydrogen generation, and used as the heat source for the reforming reaction.

Thus, the combustible gas discharged from hydrogen generating device 21 that currently performs the first action (stopping process) is used for part of the fuel of combustor 3 of another hydrogen generating device 21 that performs the second action (hydrogen generating process) without being discharged to an atmosphere.

Consequently, the raw material used for the raw material purge can be reused as the heat source for the reforming reaction of another hydrogen generating device 21 without waste, the drop in hydrogen production efficiency can be prevented, and highly economical hydrogen generating system 41 can be provided.

Also when at least one hydrogen generating device 21 performs the raw material purge during the stopping process (when the hydrogen-containing gas cannot be supplied to the hydrogen utilization device (fuel cell 51)), the hydrogen-containing gas generated by at least another hydrogen generating device 21 can be supplied to the hydrogen utilization device (fuel cell 51).

Hydrogen generating system 41 of the present exemplary embodiment includes, as the switching unit, first hydrogen generating device outlet valves 11b, 11c provided downstream of the branching point between hydrogen supply passages 5a, 5b, 5c and bypass passages 7a, 7b, 7c, and second hydrogen generating device outlet valves 12a, 12b, 12c provided in bypass passages 7a, 7b, 7c as the switching unit.

Upstream of fuel supply passages 6a, 6b, 6c that are branched into the plurality of pieces corresponding to the plurality of fuel supply units 4a, 4b, 4c downstream of fuel supply passages 6a, 6b, 6c are connected to a hydrogen-containing gas discharge port of the hydrogen utilization device (fuel cell 51) through one common fuel supply passage 6.

The plurality of bypass passages 7a, 7b, 7c communicates with common fuel supply passage 6 downstream of bypass passages 7a, 7b, 7c with respect to second hydrogen generating device outlet valves 12a, 12b, 12c.

In hydrogen generating device 21 that currently performs the first action, fuel supply unit 4 becomes the stopping state, first hydrogen generating device outlet valve 11 becomes the closed state, and second hydrogen generating device outlet valve 12 becomes the open state by the control of controller 31. In hydrogen generating device 21 that currently performs the second action, fuel supply unit 4 becomes the operating state, first hydrogen generating device outlet valve 11 becomes the open state, and second hydrogen generating device outlet valve 12 becomes the closed state.

In the above configuration, when first hydrogen generating device outlet valve 11 is in the open state while second hydrogen generating device outlet valve 12 is in the closed state, the gas discharged from hydrogen generating device 21 (reformer 1) can be supplied to the hydrogen utilization device (fuel cell 51) through hydrogen supply passage 5 without being mixed in the fuel flowing in common fuel supply passage 6 through bypass passage 7.

Conversely, when first hydrogen generating device outlet valve 11 is in the closed state while second hydrogen generating device outlet valve 12 is in the open state, the gas discharged from hydrogen generating device 21 (reformer 1) can be mixed in the fuel flowing in common fuel supply passage 6 through bypass passage 7 without being supplied to the hydrogen utilization device through hydrogen supply passage 5.

Thus, first hydrogen generating device outlet valves 11b, 11c and second hydrogen generating device outlet valves 12a, 12b, 12c having above configurations can construct the switching unit that can be controlled by controller 31.

In the method for operating hydrogen generating system 41 of the present exemplary embodiment, while at least one hydrogen generating device 21 stops the supply of the fuel from fuel supply unit 4 to combustor 3 to perform the stopping process including the raw material purge, at least another hydrogen generating device 21 performs the combustion action to burn the fuel supplied from fuel supply unit 4 using combustor 3.

The switching unit mixes the gas discharged from hydrogen generating device 21 (reformer 1) in the fuel through bypass passage 7 by the raw material purge during the stopping process.

Through the operating method, in hydrogen generating system 41, the switching unit mixes the gas discharged from hydrogen generating device 21 (reformer 1) in the fuel through bypass passage 7 by the raw material purge during the stopping process of stopping the supply of the fuel from fuel supply unit 4 to combustor 3, and the gas is used for part of the fuel of combustor 3 of at least another hydrogen generating device 21.

Consequently, the gas discharged from hydrogen generating device 21 (reformer 1) is used for part of the fuel of combustor 3 of another hydrogen generating device 21 by the raw material purge during the stopping process of stopping the supply of the fuel from fuel supply unit 4 to combustor 3 without being discharged to the atmosphere. Thus, the raw material used for the raw material purge can be reused as the heat source of another hydrogen generating device 21 without waste, the drop in hydrogen production efficiency can be prevented, and the method for operating the highly economical hydrogen generating system can be provided.

In the present exemplary embodiment, the stopping process is started from hydrogen generating device 21a. However, the stopping process may be performed in any order as long as at least one hydrogen generating device 21 in the plurality of hydrogen generating devices 21 currently performs the hydrogen generating process.

In the present exemplary embodiment, three of hydrogen generating device 21a, hydrogen generating device 21b, and hydrogen generating device 21c are installed in hydrogen generating system 41. Alternatively, at least two hydrogen generating devices 21 may be installed in hydrogen generating system 41.

In the present exemplary embodiment, the process of stopping hydrogen generating device 21 is individually performed. Alternatively, at least two hydrogen generating devices 21 may perform the first action as long as at least one hydrogen generating device 21 performs the second action.

Hydrogen generating devices 21a to 21c may include CO decreasing units at subsequent states of reformer 1a to 1c, respectively.

In the present exemplary embodiment, fuel cell 51 is used as the hydrogen utilization device. Alternatively, a hydrogen storage tank that increases the hydrogen concentration using a hydrogen separation membrane, such as a palladium thin film that extracts hydrogen from the hydrogen-containing gas, may be used as the hydrogen utilization device.

It is clear from the above description of the present exemplary embodiment that those skilled in the art can make modifications and other exemplary embodiments of the present disclosure. Thus, the above description should be interpreted as only illustration, and is intended to teach the best mode carrying out the present disclosure to those skilled in the art. The details of at least one of the structure and the function can substantially be changed without departing from the spirit of the present disclosure.

### (Third exemplary embodiment)

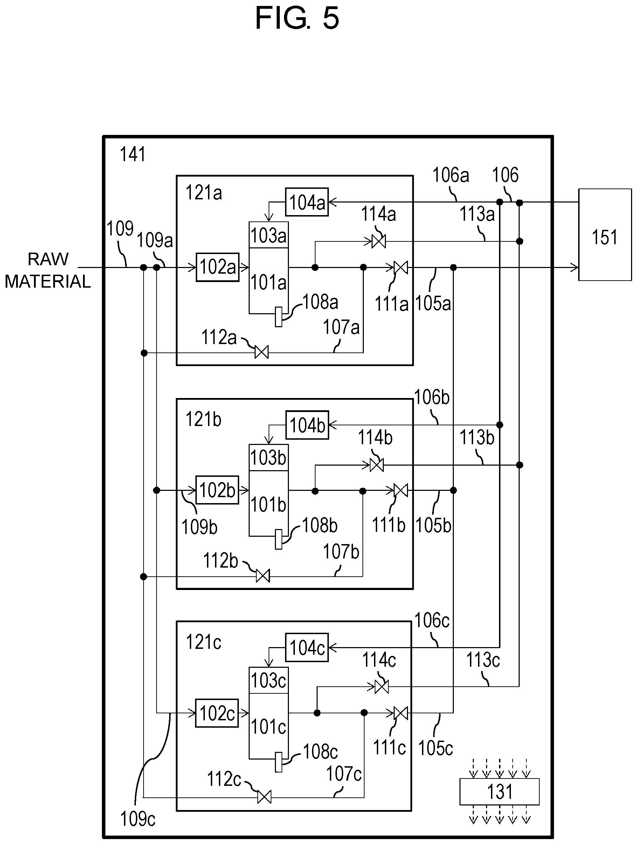

FIG. 5 is a block diagram illustrating a schematic configuration of hydrogen generating system 141 according to a third exemplary embodiment of the present disclosure.

As illustrated in FIG. 5, controller 131 controls hydrogen generating system 141 of the third exemplary embodiment. In hydrogen generating system 141, a plurality (in the present exemplary embodiment, three) of hydrogen generating devices 121a, 121b, 121c are connected in parallel in fuel cell 151 as the hydrogen utilization device.

Hydrogen generating devices 121a, 121b, 121c include reformers 101a, 101b, 101c, raw material supply units 102a, 102b, 102c that supply the raw material to reformers 101a, 101b, 101c, combustors 103a, 103b, 103c that burn the fuel to heat reformers 101a, 101b, 101c, and fuel supply units 104a, 104b, 104c that supply the fuel to combustors 103a, 103b, 103c, respectively.

Hydrogen generating devices 121a, 121b, 121c include reformer temperature detectors 108a, 108b, 108c that detect the temperatures at reformers 101a, 101b, 101c, and first hydrogen generating device outlet valves 111a, 111b, 111c and second hydrogen generating device outlet valves 112a, 112b, 112c as a switching unit that switches passages of the gas discharged from reformers 101a, 101b, 101c, respectively.

Hydrogen generating devices 121a, 121b, 121c include first hydrogen generating device outlet valves 111a, 111b, 111c and hydrogen supply passages 105a, 105b, 105c through which the hydrogen-containing gas discharged from reformers 101a, 101b, 101c are supplied to fuel cell 151, respectively.

Hydrogen generating devices 121a, 121b, 121c include fuel supply passages 106a, 106b, 106c that are branched from common fuel supply passage 106 to supply the fuel to fuel supply units 104a, 104b, 104c, respectively, the hydrogen-containing gas discharged from fuel cell 151 passing through fuel supply passages 106a, 106b, 106c.

Hydrogen generating devices 121a, 121b, 121c include second hydrogen generating device outlet valves 112a, 112b, 112c and recycle passages 107a, 107b, 107c through which the gas discharged from reformers 101a, 101b, 101c are branched in raw material supply units 102a, 102b, 102c and mixed in the supplied raw material of common raw material supply passage 109, respectively.

Hydrogen generating devices 121a, 121b, 121c include raw material supply passages 109a, 109b, 109c that is branched from common raw material supply passage 109 to supply the raw material to raw material supply units 102a, 102b, 102c, respectively.

Hydrogen generating devices 121a, 121b, 121c include bypass passages 113a, 113b, 113c through which hydrogen supply passages 105a, 105b, 105c between outlets of reformers 101a, 101b, 101c and first hydrogen generating device outlet valves 111a, 111b, 111c communicate with common fuel supply passage 106, respectively.

Hydrogen generating devices 121a, 121b, 121c include bypass valves 114a, 114b, 114c that are provided in bypass passages 113a, 113b, 113c, and open and close bypass passages 113a, 113b, 113c, respectively.

At this point, because suffixes of reference marks of these components are common to first and second exemplary embodiments, the description of the suffixes will be omitted.

Because reformers 101a to 101c are common to reformer 1a to 1c of the second exemplary embodiment, the description of reformer 101a to 101c will be omitted.

Raw material supply unit 102a is a pump that supplies the raw material to reformer 101a. Raw material supply unit 102b is a pump that supplies the raw material to reformer 101b. Raw material supply unit 102c is a pump that supplies the raw material to reformer 101c.

Because combustors 103a to 103c are common to combustors 3a to 3b of the second exemplary embodiment, the description of combustors 103a to 103c will be omitted.

Because hydrogen supply passages 105a to 105c are common to hydrogen supply passages 5a to 5c of the second exemplary embodiment, the description of hydrogen supply passages 105a to 105c will be omitted.

Common fuel supply passage 106 is connected to fuel cell 151, and the hydrogen-containing gas discharged from fuel cell 151 without being utilized by fuel cell 151 flows through common fuel supply passage 106. The hydrogen-containing gas flowing out to common fuel supply passage 106 is branched into fuel supply passage 106a, fuel supply passage 106b, and fuel supply passage 106c.

Fuel supply passage 106a is connected to combustor 103a after branched from common fuel supply passage 106. Fuel supply passage 106b is connected to combustor 103b after branched from common fuel supply passage 106. Fuel supply passage 106c is connected to combustor 103c after branched from common fuel supply passage 106.

Because fuel supply unit 104a to 104c are common to fuel supply unit 4a to 4c of the second exemplary embodiment, the description of fuel supply unit 104a to 104c will be omitted.

Recycle passage 107a is a passage that is branched from a middle of hydrogen supply passage 105a to reach common raw material supply passage 109, and the hydrogen-containing gas discharged from reformer 101a and the raw material are mixed in the raw material upstream of raw material supply units 102a to 102c, and supplied as the raw material for reformers 101a to 101c in recycle passage 107a.

Recycle passage 107b is a passage that is branched from a middle of hydrogen supply passage 105b to reach common raw material supply passage 109, and the hydrogen-containing gas discharged from reformer 101b and the raw material are mixed in the raw material upstream of raw material supply units 102a to 102c, and supplied as the raw material for reformers 101a to 101c in recycle passage 107b.

Recycle passage 107c is a passage that is branched from a middle of hydrogen supply passage 105c to reach common raw material supply passage 109, and the hydrogen-containing gas discharged from reformer 101c and the raw material are mixed in the raw material upstream of raw material supply units 102a to 102c, and supplied as the raw material for reformers 101a to 101c in recycle passage 107c.

Because reformer temperature detectors 108a to 108c are common to reformer temperature detectors 8a to 8c of the second exemplary embodiment, the description of reformer temperature detectors 108a to 108c will be omitted.

First hydrogen generating device outlet valve 111a is an electromagnetic valve disposed downstream of a branching point of recycle passage 107a on hydrogen supply passage 105a. First hydrogen generating device outlet valve 111b is an electromagnetic valve disposed downstream of a branching point of recycle passage 107b on hydrogen supply passage 105b. First hydrogen generating device outlet valve 111c is an electromagnetic valve disposed downstream of a branching point of recycle passage 107c on hydrogen supply passage 105c.

Second hydrogen generating device outlet valve 112a is an electromagnetic valve that is located on recycle passage 107a to supply the hydrogen-containing gas discharged from reformer 101a and the raw material to common raw material supply passage 109. Second hydrogen generating device outlet valve 112b is an electromagnetic valve that is located on recycle passage 107b to supply the hydrogen-containing gas discharged from reformer 101b and the raw material to common raw material supply passage 109. Second hydrogen generating device outlet valve 112c is an electromagnetic valve that is located on recycle passage 107c to supply the hydrogen-containing gas discharged from reformer 101c and the raw material to common raw material supply passage 109.

Bypass passage 113a is a passage that is branched upstream of first hydrogen generating device outlet valve 111a of hydrogen supply passage 105a to reach common fuel supply passage 106, and is used in the case that the hydrogen-containing gas discharged from reformer 101a and the raw material are supplied as the fuel for combustors 103a to 103c.

Bypass passage 113b is a passage that is branched upstream of first hydrogen generating device outlet valve 111b of hydrogen supply passage 105b to reach common fuel supply passage 106, and is used in the case that the hydrogen-containing gas discharged from reformer 101b and the raw material are supplied as the fuel for combustors 103a to 103c.

Bypass passage 113c is a passage that is branched upstream of first hydrogen generating device outlet valve 111c of hydrogen supply passage 105c to reach common fuel supply passage 106, and is used in the case that the hydrogen-containing gas discharged from reformer 101c and the raw material are supplied as the fuel for combustors 103a to 103c.

Bypass valve 114a is an electromagnetic valve on bypass passage 113a. Bypass valve 114b is an electromagnetic valve on bypass passage 113b. Bypass valve 114c is an electromagnetic valve on bypass passage 113c.

Controller 131 controls the operation of hydrogen generating system 141. Controller 131 includes a signal input and output unit (not illustrated), an arithmetic processor (not illustrated), and a storage (not illustrated) in which the control program is stored. The control program is read in the arithmetic processor, and executed to perform later-described processes.

In fuel cell 151, the electric power is obtained by the electrochemical reaction from hydrogen supplied from hydrogen generating system 141 and oxygen in air.

The action and effect of hydrogen generating system 141 having the above configuration will be described below. Controller 131 controls hydrogen generating device 121a to 121c of hydrogen generating system 141 to perform the following action.

Each of hydrogen generating devices 121a to 121c performs at least one of the standby process, the starting process, the hydrogen generating process, and the stopping process.

Each action will be described with hydrogen generating device 121a as an example.

In the case that hydrogen generating device 121b and hydrogen generating device 121c perform the same action as the content performed by hydrogen generating device 121a, the action content is identical to that of hydrogen generating device 121a, so that the description will be omitted.

In this case, the reference marks described in the component and step are performed such that "second hydrogen generating device outlet valve 112a" is replaced with "second hydrogen generating device outlet valve 112b" or "second hydrogen generating device outlet valve 112c".

The standby process is a state in which the supply of the raw material and the fuel to hydrogen generating device 121a is stopped.

In hydrogen generating device 121a during the standby process, raw material supply unit 102a and fuel supply unit 104a are in the stopping state, and first hydrogen generating device outlet valve 111a, second hydrogen generating device outlet valve 112a, and bypass valve 114a are in the closed state.

The starting process is an action in which the standby process is terminated, the temperature at reformer 101a of hydrogen generating device 121a is raised to start the hydrogen generation by the reforming reaction, and the hydrogen-containing gas is supplied to fuel cell 151.

At the beginning of the starting process, controller 131 transmits an instruction to start to hydrogen generating device 121a, bypass valve 114a is set in the open state, raw material supply unit 102a is operated, and the raw material is supplied to common fuel supply passage 106 through reformer 101a, bypass passage 113a, and bypass valve 114a.

At this point, the raw material is not supplied to fuel cell 151 because first hydrogen generating device outlet valve 111a is in the closed state.

Subsequently, the raw material supplied to common fuel supply passage 106 is supplied to combustor 103a through fuel supply passage 106a by operating fuel supply unit 104a provided in hydrogen generating device 121a. Reformer 101a is heated so as to become a predetermined temperature. The predetermined temperature of reformer 101a is a temperature suitable for the reforming reaction. In the present exemplary embodiment, the predetermined temperature is set to 600°C.

At the time point when reformer 101a reaches 600°C, first hydrogen generating device outlet valve 111a is set in the open state, bypass valve 114a is set in the closed state, the passage from reformer 101a to common fuel supply passage 106 through hydrogen supply passage 105a and fuel cell 151 is formed to complete the starting process. Bypass valve 114a becomes the open state only in the starting process, and bypass valve 114a becomes the closed state in action except for the starting process.

The hydrogen generating process is an action to supply the hydrogen-containing gas generated by the reforming reaction of reformer 101a to fuel cell 151.

In the hydrogen generating process, the raw material is supplied from raw material supply unit 102a to reformer 101a, the fuel is supplied from fuel supply unit 104a to combustor 103a, first hydrogen generating device outlet valve 111a is set in the open state, second hydrogen generating device outlet valve 112a is set in the closed state, and the hydrogen-containing gas and the raw material that are discharged from hydrogen generating device 121a are supplied to fuel cell 151 through hydrogen supply passage 105a.

The stopping process is an action in which hydrogen generating device 121a stops the hydrogen generating process to drop the temperature at reformer 101a, and the hydrogen generating process is stopped in the stopping process, thereby reaching the standby process.

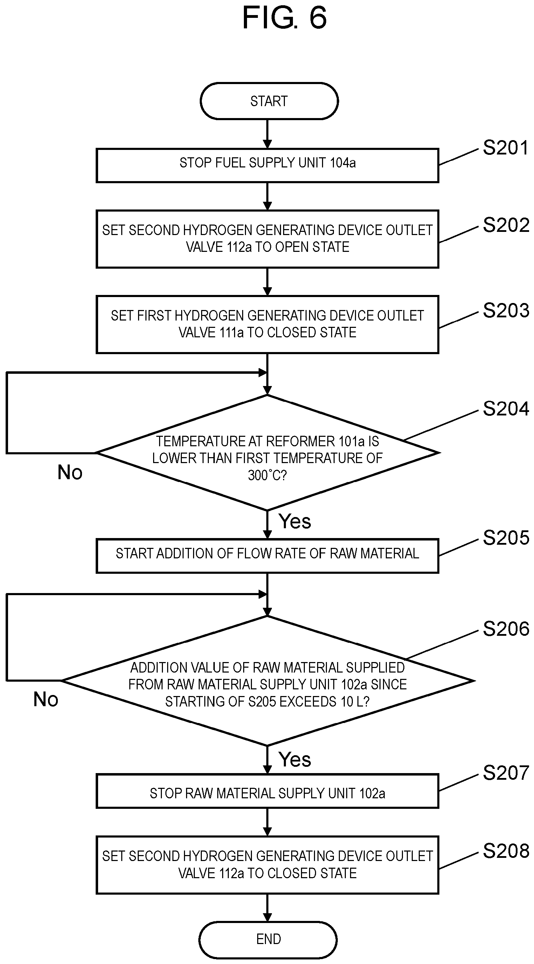

FIG. 6 is a flowchart illustrating the process of stopping the hydrogen generating device of the third exemplary embodiment of the present disclosure.

The stopping process of hydrogen generating device 21a will be described with reference to FIG. 6.

Hereinafter, the action in which, while the raw material is supplied from raw material supply unit 102a to reformer 101a, first hydrogen generating device outlet valve 111a is set in the closed state, second hydrogen generating device outlet valve 112a is set in the open state, and the hydrogen-containing gas and the raw material that are discharged from hydrogen generating device 121a are introduced to common raw material supply passage 109 through recycle passage 107a is written as the first action. The first action is a part of the stopping process.

Hereinafter, the hydrogen generating process is written as the second action.

Hydrogen generating devices 21a to 21c perform the second action before the stopping process is started. Controller 131 performs the first action during the process of stopping hydrogen generating device 121a. On the other hand, hydrogen generating device 121b and hydrogen generating device 121c continue the second action.

In order to drop the temperature at reformer 101a to hardly generate the reforming reaction, controller 131 stops the action of fuel supply unit 104a to stop the supply of the fuel to combustor 103a (S201). Subsequently, second hydrogen generating device outlet valve 112a is set in the open state (S202). Subsequently, first hydrogen generating device outlet valve 111a is set in the closed state (S203).

When step S203 is completed, the hydrogen-containing gas and the raw material are mixed in common raw material supply passage 109 from reformer 101a through recycle passage 107a, and the first action is started.

When the first action is started, in hydrogen generating device 121b and hydrogen generating device 121c that currently perform the second action, the hydrogen-containing gas and the raw material that are discharged from hydrogen generating device 121a can be used for the reforming reaction in reformer 101b and reformer 101c.

Subsequently, controller 131 acquires the internal temperature of reformer 101a from reformer temperature detector 108a to compare the internal temperature to the first temperature. When the internal temperature of reformer 101a is lower than the first temperature (YES in step S204), the action transitions to step S205.

On the other hand, when the internal temperature of reformer 1a is not lower than the first temperature (NO in step S204), step S204 is repeatedly performed. As used herein, the first temperature means a temperature at which the reforming reaction is hardly generated in reformer 101a. In the present exemplary embodiment, the first temperature is set to 300°C.

Subsequently, controller 131 starts the addition of the flow rate of the raw material (S205). Step S206 is terminated when the volume of the flow rate of the raw material supplied from raw material supply unit 102a since the action in step S205 is started exceeds the triple of the volume of reformer 101a (YES in step S206). Until the volume of the amount of flowing raw material exceeds the triple of the volume of reformer 1a (NO in S206), step S206 is repeatedly performed.

As used herein, the triple of the volume of reformer 101a means a volume of the raw material necessary for the completion of the discharge of the hydrogen-containing gas from reformer 101a and the replacement to the raw material, the volume being previously experimentally obtained. In the present exemplary embodiment, the triple of the volume of reformer 101a is set to 10 L (see FIG. 6). The flow rate of the raw material supplied from raw material supply unit 102a to reformer 101a is set to 1 L/min.

Subsequently, controller 131 stops raw material supply unit 102a (S207). The supply of the raw material to reformer 101a is stopped in step S207, so that the first action is terminated. Subsequently, controller 131 sets second hydrogen generating device outlet valve 112a to the closed state (S208).

Through the above action, the process of stopping hydrogen generating device 121a is terminated, and hydrogen generating device 121a transitions to the standby process.

As described above, in the present exemplary embodiment, by stopping fuel supply unit 104a of hydrogen generating device 121a at the beginning of the stopping process, the combustion of combustor 103a of hydrogen generating device 121a is stopped to drop the temperature at reformer 101a of hydrogen generating device 121a that currently performs the first action.

At the same time, the hydrogen-containing gas and the raw material are discharged from hydrogen generating device 121a that currently performs the first action by the raw material supplied to hydrogen generating device 121a that currently performs the first action.

The hydrogen-containing gas discharged from hydrogen generating device 121a that currently performs the first action and the raw material that is not used for the reforming reaction in reformer 101a due to the temperature drop of reformer 101a can be used as the raw material for the reforming reaction without being discharged to the atmosphere in hydrogen generating device 121b and hydrogen generating device 121c that currently perform the second action. Consequently, the drop in hydrogen production efficiency of hydrogen generating system 141 can be prevented.

As described above, hydrogen generating system 141 of the present exemplary embodiment includes the plurality (three) of hydrogen generating devices 121a, 121b, 121c that include reformers 101a, 101b, 101c that generate the hydrogen-containing gas from the raw material, and raw material supply units 102a, 102b, 102c that supply the raw material to reformers 101a, 101b, 101c, respectively, the plurality (three) of hydrogen generating devices 121a, 121b, 121c being connected in parallel.

Hydrogen generating system 141 includes recycle passages 107a, 107b, 107c that are separately provided in the plurality of hydrogen generating devices 121a, 121b, 121c to mix the gas discharged from hydrogen generating devices 121a, 121b, 121c (reformers 101a, 101b, 101c) in the raw material supplied to the plurality of raw material supply units 102a, 102b, 102c to flow in common raw material supply passage 109.

Hydrogen generating system 141 includes the switching unit that is individually provided in each of the plurality of hydrogen generating devices 121a, 121b, 121c. The switching unit switches between the supply of the gas discharged from hydrogen generating devices 121a, 121b, 121c (reformers 101a, 101b, 101c) to fuel cell 151 as the hydrogen utilization device without mixing the gas in the raw material flowing in common raw material supply passage 109 through recycle passages 107a, 107b, 107c and the mixing of the gas in the raw material flowing in common raw material supply passage 109 through recycle passages 107a, 107b, 107c without supplying the gas to hydrogen utilization device. For example, the switching unit is first hydrogen generating device outlet valves 111a, 111b, 111c and second hydrogen generating device outlet valves 112a, 112b, 112c.

The gas discharged from hydrogen generating devices 121a, 121b, 121c (reformers 101a, 101b, 101c) are mixed, using the switching unit, in the raw material flowing in common raw material supply passage 109 by the raw material purge during the stopping process.

Hydrogen generating system 141 mixes the gas discharged from hydrogen generating devices 121a, 121b, 121c (reformers 101a, 101b, 101c) by the raw material purge during the stopping process in the raw material located upstream of raw material supply units 102a, 102b, 102c to flow in common raw material supply passage 109 using the switching unit.

Thus, the gas discharged from hydrogen generating devices 121a, 121b, 121c (reformers 101a, 101b, 101c) by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and highly economical hydrogen generating system 141 can be provided.

In hydrogen generating system 141, while at least one hydrogen generating device 121 mixes the gas discharged from hydrogen generating device 121 (reformer 101) by the raw material purge during the stopping process in the raw material located upstream of raw material supply unit 102 to flow in common raw material supply passage 109 using the switching unit, at least another hydrogen generating device 121 supplies the hydrogen-containing gas generated by reformer 101 to the hydrogen utilization device (fuel cell 151) using the switching unit.

In hydrogen generating system 141, while at least one hydrogen generating device 121 mixes the gas discharged from hydrogen generating device 121 (reformer 101) by the raw material purge during the stopping process in the raw material located upstream of raw material supply unit 102 to flow in common raw material supply passage 109, at least another hydrogen generating device 121 supplies the hydrogen-containing gas generated by reformer 101 to the hydrogen utilization device (fuel cell 151).

Thus, the gas discharged from hydrogen generating device 121 (reformer 101) by the raw material purge during the stopping process is mixed in the raw material located upstream of raw material supply unit 102 to flow in common raw material supply passage 109, and is used as part of the raw material for the reforming reaction of at least another hydrogen generating device 21. Consequently, the raw material used for the raw material purge can be reused as the raw material for the reforming reaction without waste, the drop in hydrogen production efficiency can be prevented, and highly economical hydrogen generating system 141 can be provided.

Also when at least one hydrogen generating device 121 performs the raw material purge during the stopping process (when the hydrogen-containing gas cannot be supplied to the hydrogen utilization device (fuel cell 151)), the hydrogen-containing gas generated by at least another hydrogen generating device 121 (reformer 101) can be supplied to hydrogen utilization device (fuel cell 151).

Hydrogen generating system 141 of the present exemplary embodiment includes controller 131 that controls hydrogen generating device 121 and the switching unit. Controller 131 causes hydrogen generating device 121 that performs the stopping process to perform the purge action using the raw material supplied from raw material supply unit 102. The switching unit of hydrogen generating device 121 that performs the stopping process before the purge action is switched such that the gas discharged from hydrogen generating device 121 (reformer 101) that currently performs the stopping process is mixed in the raw material located upstream of raw material supply unit 102 to flow in common raw material supply passage 109 through recycle passage 107 by the purge action without being supplied to the hydrogen utilization device (fuel cell 151).

In hydrogen generating system 141, controller 131 controls the plurality of hydrogen generating devices 121a, 121b, 121c and the plurality of switching units (first hydrogen generating device outlet valves 111a, 111b, 111c and second hydrogen generating device outlet valves 112a, 112b, 112c). Consequently, hydrogen generating device 121 that performs the stopping process performs the purge action using the raw material supplied from raw material supply unit 102, and the gas discharged from hydrogen generating device 121 (reformer 101) that currently performs the stopping process is mixed in the raw material located upstream of raw material supply unit 102 to flow in common raw material supply passage 109 by the purge action.

Thus, the gas discharged from hydrogen generating devices 121a, 121b, 121c (reformers 101a, 101b, 101c) by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and highly economical hydrogen generating system 141 can be provided.

Hydrogen generating system 141 of the present exemplary embodiment includes controller 131 that controls hydrogen generating devices 121a, 121b, 121c and the switching units (first hydrogen generating device outlet valves 111a, 111b, 111c and second hydrogen generating device outlet valves 112a, 112b, 112c).

Controller 131 causes hydrogen generating device 121 that performs the stopping process to perform the purge action using the raw material supplied from raw material supply unit 102, and switches the switching unit of hydrogen generating device 121 that performs the stopping process before the purge action such that the gas discharged from hydrogen generating device 121 that currently performs the stopping process is mixed in the raw material located upstream of raw material supply unit 102 to flow in common raw material supply passage 109 through raw material recycle passage 107 by the purge action without being supplied to the hydrogen utilization device (fuel cell 151). While at least one hydrogen generating device 121 mixes the gas discharged from hydrogen generating device 121 (reformer 101) by the raw material purge during the stopping process in the raw material located upstream of raw material supply unit 102 to flow in common raw material supply passage 109 using the switching unit, controller 131 causes at least another hydrogen generating device 121 to generate the hydrogen-containing gas from the raw material supplied from raw material supply unit 102 using reformer 101. Controller 131 causes the switching unit to supply the generated hydrogen-containing gas to the hydrogen utilization device (fuel cell 151).

Controller 131 controls the plurality of hydrogen generating devices 121 and the plurality of switching units. Consequently, hydrogen generating device 121 that performs the stopping process performs the purge action using the raw material supplied from raw material supply unit 102, and the gas discharged from hydrogen generating device 121 (reformer 101) that currently performs the stopping process is mixed in the raw material located upstream of raw material supply unit 102 to flow in common raw material supply passage 109 by the purge action, and used as part of the raw material for the reforming reaction of at least another hydrogen generating device 121 (reformer 101). Thus, the raw material used for the raw material purge can be reused as the raw material for the reforming reaction without waste, the drop in hydrogen production efficiency can be prevented, and the highly economical hydrogen generating system 141 can be provided.

When at least one hydrogen generating device 121 performs the raw material purge during the stopping process (when the hydrogen-containing gas cannot be supplied to the hydrogen utilization device (fuel cell 151)), the hydrogen-containing gas generated by at least another hydrogen generating device 121 (reformer 101) can be supplied to hydrogen utilization device (fuel cell 151).

In hydrogen generating system 141 of the present exemplary embodiment, the switching units are constructed with first hydrogen generating device outlet valves 111a, 111b, 111c and second hydrogen generating device outlet valves 112a, 112b, 112c that open and close recycle passages 107a, 107b, 107c, respectively. First hydrogen generating device outlet valves 111a, 111b, 111c open and close portions downstream of branching points of recycle passages 107a, 107b, 107c in hydrogen supply passages 105a, 105b, 105c through which the hydrogen-containing gas discharged from hydrogen generating devices 121a, 121b, 121c (reformers 101a, 101b, 101c) are supplied to the hydrogen utilization device (fuel cell 151).

In the case that the gas discharged from hydrogen generating device 121 (reformer 101) is supplied to the hydrogen utilization device (fuel cell 151) without being mixed in the raw material located upstream of raw material supply unit 102 to flow in common raw material supply passage 109 through recycle passage 107, first hydrogen generating device outlet valve 111 is in the open state, and second hydrogen generating device outlet valve 112 is in the closed state. In the case that the gas discharged from hydrogen generating device 121 (reformer 101) is mixed in the raw material located upstream of raw material supply unit 102 to flow in common raw material supply passage 109 through recycle passage 107 without being supplied to the hydrogen utilization device (fuel cell 151), first hydrogen generating device outlet valve 111 is in the closed state, and second hydrogen generating device outlet valve 112 is in the open state.

Consequently, the switching unit can be constructed with first hydrogen generating device outlet valve 111 that opens and closes the portion downstream of the branching point of recycle passage 107 in hydrogen supply passage 105 through which the hydrogen-containing gas discharged from hydrogen generating device 121 (reformer 101) is supplied to the hydrogen utilization device (fuel cell 151), and second hydrogen generating device outlet valve 112 that opens and closes recycle passage 107. In the case that the gas discharged from hydrogen generating device 121 (reformer 101) is supplied to the hydrogen utilization device (fuel cell 151) without being mixed in the raw material located upstream of raw material supply unit 102 to flow in common raw material supply passage 109 through recycle passage 107, first hydrogen generating device outlet valve 111 is set to the open state, and second hydrogen generating device outlet valve 112 is set to the closed state.

In the case that the gas discharged from hydrogen generating device 121 (reformer 101) is mixed in the raw material located upstream of raw material supply unit 102 to flow in common raw material supply passage 109 through recycle passage 107 without being supplied to the hydrogen utilization device (fuel cell 151), first hydrogen generating device outlet valve 111 is set to the closed state, and second hydrogen generating device outlet valve 112 is set to the open state.

In the method for operating hydrogen generating system 141 of the present exemplary embodiment, the gas discharged from hydrogen generating device 121 (reformer 101) by the raw material purge during the stopping process is mixed in the raw material flowing in common raw material supply passage 109 by the switching unit (first hydrogen generating device outlet valve 111 and second hydrogen generating device outlet valve 112).

Through the operating method, hydrogen generating system 141 mixes the gas discharged from hydrogen generating device 121 (reformer 101) by the raw material purge during the stopping process in the raw material located upstream of raw material supply unit 102 to flow in common raw material supply passage 109 by the switching unit (first hydrogen generating device outlet valve 111 and second hydrogen generating device outlet valve 112).

Thus, the gas discharged from hydrogen generating device 121 (reformer 101) by the raw material purge during the stopping process is recycled as the raw material without being discharged to the atmosphere. Consequently, the raw material used for the raw material purge can be reused as the raw material for the reforming reaction without waste, the drop in hydrogen production efficiency can be prevented, and highly economical hydrogen generating system 141 can be provided.

In the method for operating hydrogen generating system 141 of the present exemplary embodiment, while at least one hydrogen generating device 121 mixes the gas discharged from hydrogen generating device 121 (reformer 101) by the raw material purge during the stopping process in the raw material located upstream of raw material supply unit 102 to flow in common raw material supply passage 109 using the switching unit, at least another hydrogen generating device 121 supplies the hydrogen-containing gas generated by reformer 101 to the hydrogen utilization device using the switching unit.

Through the operating method, in hydrogen generating system 141, while at least one hydrogen generating device 121 mixes the gas discharged from hydrogen generating device 121 (reformer 101) by the raw material purge during the stopping process in the raw material located upstream of raw material supply unit 102 to flow in common raw material supply passage 109, at least another hydrogen generating device 121 supplies the hydrogen-containing gas generated by reformer 101 to the hydrogen utilization device (fuel cell 151).

Thus, the gas discharged from hydrogen generating device 121 (reformer 101) by the raw material purge during the stopping process is mixed in the raw material located upstream of raw material supply unit 102 to flow in common raw material supply passage 109, and is used as part of the raw material for the reforming reaction of at least another hydrogen generating device 121. Hence, the raw material used for the raw material purge can be reused as the raw material for the reforming reaction without waste, the drop in hydrogen production efficiency can be prevented, and the method for operating highly economical hydrogen generating system 141 can be provided.

When at least one hydrogen generating device 121 performs the raw material purge during the stopping process (when the hydrogen-containing gas cannot be supplied to the hydrogen utilization device (fuel cell 151)), the hydrogen-containing gas generated by at least another hydrogen generating device 121 (reformer 101) can be supplied to the hydrogen utilization device (fuel cell 151).

Hydrogen generating devices 121a to 121c may include CO decreasing units in which a metamorphic reaction is utilized at subsequent states of reformer 101a to 101c, respectively.

In the present exemplary embodiment, three of hydrogen generating device 121a, hydrogen generating device 121b, and hydrogen generating device 121c are installed in hydrogen generating system 141. Alternatively, at least two hydrogen generating devices 121 may be installed in hydrogen generating system 141. In at least two hydrogen generating devices 121, by stopping fuel supply unit 104 of hydrogen generating device 121 that currently performs the first action, the combustion of combustor 103 of hydrogen generating device 121 that currently performs the first action is stopped to drop the temperature at reformer 101 of hydrogen generating device 121 that currently performs the first action.

The hydrogen-containing gas and the raw material are discharged from hydrogen generating device 121 that currently performs the first action by the raw material supplied to hydrogen generating device 121 that currently performs the first action. The hydrogen-containing gas and the raw material that are discharged from hydrogen generating device 121 that currently performs the first action can be used as the raw material for the reforming reaction without being discharged to the atmosphere in hydrogen generating device 121 that currently performs the second action, so that the drop in hydrogen production efficiency of hydrogen generating system 141 can be prevented.

In the present exemplary embodiment, the first action is individually performed during the stopping process. Alternatively, at least two hydrogen generating devices 121 may perform the first action as long as at least one hydrogen generating device 121 performs the second action.

When at least one hydrogen generating device 121 performs the second action, the hydrogen-containing gas and the raw material are discharged from hydrogen generating device 121 that currently performs the first action by the raw material supplied to hydrogen generating device 121 that currently performs the first action.

The hydrogen-containing gas and the raw material that are discharged from hydrogen generating device 121 that currently performs the first action can be used as the raw material for the reforming reaction without being discharged to the atmosphere in hydrogen generating device 121 that currently performs the second action, so that the drop in hydrogen production efficiency of hydrogen generating system 141 can be prevented.

It is clear from the above description of the present exemplary embodiments that those skilled in the art can make modifications and other exemplary embodiments of the present disclosure. Thus, the above description should be interpreted as only illustration, and is intended to teach the best mode carrying out the present disclosure to those skilled in the art. The details of at least one of the structure and the function can substantially be changed without departing from the spirit of the present disclosure.

### INDUSTRIAL APPLICABILITY

According to the present disclosure, energy of the raw material supplied to the reformer in the stopping process is used to heat the operating reformer, so that the stopping process in which the hydrogen production efficiency is not dropped can be performed. For this reason, the present disclosure can provide the high-merchantability hydrogen generating system.

### REFERENCE MARKS IN THE DRAWINGS

1, 1a, 1b, 1c, 101, 101a, 101b, 101c, 201, 201a, 201b, 201c: reformer
2, 2a, 2b, 2c, 102, 102a, 102b, 102c, 202, 202a, 202b, 202c: raw material supply unit
3, 3a, 3b, 3c, 103, 103a, 103b, 103c, 203, 203a, 203b, 203c: combustor
4, 4a, 4b, 4c, 104, 104a, 104b, 104c, 204, 204a, 204b, 204c: fuel supply unit
5, 5a, 5b, 5c, 105, 105a, 105b, 105c, 205, 205a, 205b, 205c: hydrogen supply passage
6, 106, 207: common fuel supply passage
6a, 6b, 6c, 106a, 106b, 106c, 208a, 208b, 208c: fuel supply passage
7, 7a, 7b, 7c, 113, 113a, 113b, 113c: bypass passage
8a, 8b, 8c, 108a, 108b, 108c, 209a, 209b, 209c: reformer temperature detector
11, 11a, 11b, 11c, 111, 111a, 111b, 111c: first hydrogen generating device outlet valve
12, 12a, 12b, 12c, 112, 112a, 112b, 112c: second hydrogen generating device outlet valve
21, 21a, 21b, 21c, 121, 121a, 121b, 121c: hydrogen generating device
31, 131, 231: controller
41, 141, 241: hydrogen generating system
51, 151, 251: fuel cell
107, 107a, 107b, 107c: recycle passage
109: common raw material supply passage
109a, 109b, 109c: raw material supply passage
114, 114a, 114b, 114c: bypass valve
206: common hydrogen supply passage

## Claims

1. A hydrogen generating system comprising:
a plurality of reformers that generates hydrogen-containing gas from a raw material;
a plurality of raw material supply units that corresponds to the plurality of reformers to supply the raw material to the plurality of reformers;
a plurality of combustors that burns fuel to heat the plurality of reformers;
a plurality of fuel supply units that corresponds to the plurality of combustors to supply the fuel to the plurality of combustors;
a hydrogen supply passage through which the hydrogen-containing gas generated by the plurality of reformers is supplied to a hydrogen utilization device;
a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device; and
a controller,
wherein the controller:
when at least one reformer among the plurality of reformers is to perform a stopping action to stop generation of hydrogen, causes a corresponding fuel supply unit among the plurality of fuel supply units to stop the supply of the fuel to a corresponding combustor among the plurality of combustors before the stopping action is started,
causes the at last one reformer to perform a purge action to purge the at least one reformer using raw material after the stopping action is started, the raw material being supplied from a corresponding raw material supply unit among the plurality of raw material supply units to the at least one reformer,
causes one or more fuel supply units among the plurality of fuel supply units to supply gas to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and causes one or more combustors among the plurality of combustors to burn the gas, the one or more combustors corresponding to the one or more reformers.

2. A method for operating a hydrogen generating system including
a plurality of reformers that generates hydrogen-containing gas from a raw material,
a plurality of raw material supply units that corresponds to the plurality of reformers to supply the raw material to the plurality of reformers,
a plurality of combustors that burns fuel to heat the plurality of reformers,
a plurality of fuel supply units that correspond to the plurality of combustors to supply the fuel to the plurality of combustors,
a hydrogen supply passage through which the hydrogen-containing gas generated by the plurality of reformers is supplied to a hydrogen utilization device, and
a fuel supply passage through which unused hydrogen-containing gas is distributed and supplied to the plurality of fuel supply units as the fuel, the unused hydrogen-containing gas being part of the hydrogen-containing gas generated by the plurality of reformers and not being used in the hydrogen utilization device,
the method comprising:
when at least one reformer among the plurality of reformers is to perform a stopping action to stop generation of hydrogen, stopping the supply of the fuel from a corresponding fuel supply unit among the plurality of fuel supply units to a corresponding combustor among the plurality of combustors before the stopping action is started;
performing purge action to purge the at least one reformer using raw material after the stopping action is started, the raw material being supplied from a corresponding raw material supply unit among the plurality of raw material supply units to the at least one reformer; and
supplying gas from one or more fuel supply units among the plurality of fuel supply units to one or more combustor, the gas being generated by the purging and discharged from the at least one reformer, the one or more fuel supply units and the one or more combustor corresponding to one or more reformers among the plurality of reformers excepts the at least one reformer, the one or more reformers being on standby or requiring the heating, and burning the gas using one or more combustors among the plurality of combustors, the one or more combustors corresponding to the one or more reformers.

3. A hydrogen generating system in which a plurality of hydrogen generating devices is connected in parallel, each of the hydrogen generating device including a reformer that generates a hydrogen-containing gas from a raw material, a raw material supply unit that supplies the raw material to the reformer, a combustor that burns fuel to heat the reformer, and a fuel supply unit that supplies the fuel to the combustor, wherein
each of the plurality of hydrogen generating devices includes
a hydrogen supply passage through which the hydrogen-containing gas discharged from each of the plurality of hydrogen generating devices is supplied to a hydrogen utilization device,
a fuel supply passage through which the hydrogen-containing gas discharged from the hydrogen utilization device without being utilized in the hydrogen utilization device is distributed and supplied to the fuel supply unit as the fuel,
a bypass passage through which the hydrogen-containing gas discharged from each of the plurality of hydrogen generating devices is mixed in the fuel before being distributed to the fuel supply unit, and
a switching unit that selectively switches between the supply of the hydrogen-containing gas discharged from each of the plurality of hydrogen generating devices to the hydrogen utilization device through the hydrogen supply passage without being mixed in the fuel through the bypass passage and the mixing of the hydrogen-containing gas discharged from each of the plurality of hydrogen generating devices in the fuel through the bypass passage without being supplied to the hydrogen utilization device,
while at least one hydrogen generating device among the plurality of hydrogen generating devices stops the supply of the fuel from the fuel supply unit to the combustor to perform a stopping process including raw material purge, at least another hydrogen generating device except for the at least one hydrogen generating device among the plurality of hydrogen generating devices performs a combustion action to burn the fuel supplied from the fuel supply unit using the combustor, and
gas discharged from the at least one hydrogen generating device is mixed in the fuel of the at least another hydrogen generating device through the bypass passage using the switching unit by the raw material purge.

4. The hydrogen generating system according to claim 3, further comprising a controller,
wherein while at least one hydrogen generating device among the plurality of hydrogen generating devices performs a first action to supply the raw material from the raw material supply unit to the reformer that is not heated by the combustor because the fuel is not supplied from the fuel supply unit to the combustor, the controller causes at least another hydrogen generating device except for the at least one hydrogen generating device that performs the first action among the plurality of hydrogen generating devices to perform a second action to supply the raw material from the raw material supply unit to the reformer heated by the combustor that burns the fuel supplied from the fuel supply unit, and mixes the gas discharged from the at least one hydrogen generating device that performs the first action in the fuel of the at least another hydrogen generating device through the bypass passage using the switching unit.

5. The hydrogen generating system according to claim 4, wherein
the switching unit includes a first hydrogen generating device outlet valve provided downstream of a branching point of the bypass passage in the hydrogen supply passage and a second hydrogen generating device outlet valve provided in the bypass passage,
upstream of the fuel supply passage that is branched downstream according to the fuel supply unit is connected to a hydrogen-containing gas discharge port of the hydrogen utilization device through one common fuel supply passage,
the bypass passage communicates with the common fuel supply passage downstream of the bypass passage with respect to the second hydrogen generating device outlet valve, and
the controller controls the hydrogen generating device that currently performs the first action such that the fuel supply unit is in a stopping state, such that the first hydrogen generating device outlet valve is in a closed state, and such that the second hydrogen generating device outlet valve is in an open state, and controls the hydrogen generating device that currently performs the second action such that the fuel supply unit is in an operating state, such that the first hydrogen generating device outlet valve is in the open state, and such that the second hydrogen generating device outlet valve is in the closed state.

6. A method for operating a hydrogen generating system in which a plurality of hydrogen generating devices is connected in parallel, each of the hydrogen generating device including a reformer that generates a hydrogen-containing gas from a raw material, a raw material supply unit that supplies the raw material to the reformer, a combustor that burns fuel to heat the reformer, and a fuel supply unit that supplies the fuel to the combustor, each of the plurality of hydrogen generating devices including
a hydrogen supply passage through which the hydrogen-containing gas discharged from each of the plurality of hydrogen generating devices is supplied to a hydrogen utilization device,
a fuel supply passage through which the hydrogen-containing gas discharged from the hydrogen utilization device without being utilized in the hydrogen utilization device is distributed and supplied to the fuel supply unit as the fuel,
a bypass passage through which the hydrogen-containing gas discharged from each of the plurality of hydrogen generating devices is mixed in the fuel before being distributed to the fuel supply unit, and
a switching unit that selectively switches between the supply of the hydrogen-containing gas discharged from each of the plurality of hydrogen generating devices to the hydrogen utilization device through the hydrogen supply passage without being mixed in the fuel through the bypass passage and the mixing of the hydrogen-containing gas discharged from each of the plurality of hydrogen generating devices in the fuel through the bypass passage without being supplied to the hydrogen utilization device,
the method comprising:
while at least one hydrogen generating device among the plurality of hydrogen generating devices stops the supply of the fuel from the fuel supply unit to the combustor to perform a stopping process including raw material purge, performing a combustion action to burn the fuel supplied from the fuel supply unit using the combustor in at least another hydrogen generating device except for the at least one hydrogen generating device among the plurality of hydrogen generating devices; and
mixing gas discharged from the at least one hydrogen generating device by the raw material purge in the fuel of the at least another hydrogen generating device through the bypass passage using the switching unit.

7. A hydrogen generating system in which a plurality of hydrogen generating devices is connected in parallel, each of the hydrogen generating device including a reformer that generates a hydrogen-containing gas from a raw material and a raw material supply unit that supplies the raw material to the reformer, wherein
each of the plurality of hydrogen generating devices includes
a recycle passage through which the hydrogen-containing gas discharged from each of the plurality of hydrogen generating devices is mixed in the raw material supplied to the raw material supply unit, and
a switching unit that selectively switches between the supply of the hydrogen-containing gas discharged from each of the plurality of hydrogen generating devices to a hydrogen utilization device without being mixed in the fuel through the recycle passage and the mixing of the hydrogen-containing gas discharged from each of the plurality of hydrogen generating devices in the fuel through the recycle passage without being supplied to the hydrogen utilization device, and
gas discharged by raw material purge from the hydrogen generating device that currently performs a stopping process among the plurality of hydrogen generating devices is mixed in the raw material using the switching unit.

8. The hydrogen generating system according to claim 7, wherein while at least one hydrogen generating device among the plurality of hydrogen generating devices mixes the gas discharged by the raw material purge during the stopping process in the raw material using the switching unit, at least another hydrogen generating device except for the at least one hydrogen generating device among the plurality of hydrogen generating devices supplies the hydrogen-containing gas generated by the reformer to the hydrogen utilization device using the switching unit.

9. The hydrogen generating system according to claim 7, further comprising a controller,
wherein the controller causes the hydrogen generating device that currently performs the stopping process among the plurality of hydrogen generating devices to perform a purge action using the raw material supplied from the raw material supply unit, and switches the switching unit of the hydrogen generating device before the purge action such that the gas discharged from the hydrogen generating device that currently performs the stopping process is mixed in the raw material through the recycle passage without being supplied to the hydrogen utilization device.

10. The hydrogen generating system according to claim 7, wherein
the controller causes the hydrogen generating device that performs the stopping process among the plurality of hydrogen generating devices to perform the purge action using the raw material supplied from the raw material supply unit, and switches the switching unit of the hydrogen generating device before the purge action such that gas discharged by the purge action from the hydrogen generating device is mixed in the raw material through the recycle passage without being supplied to the hydrogen utilization device, and
while at least one hydrogen generating device among the plurality of hydrogen generating devices mixes the gas discharged from the hydrogen generating device by the raw material purge during the stopping process in the raw material using the switching unit, the controller causes at least another hydrogen generating device except for the at least one hydrogen generating device among the plurality of hydrogen generating devices to generate the hydrogen-containing gas from the raw material supplied from the raw material supply unit using the reformer, and supplies the hydrogen-containing gas to the hydrogen utilization device using the switching unit.

11. The hydrogen generating system according to any one of claims 7 to 10, wherein
each of the plurality of hydrogen generating devices further includes a hydrogen supply passage that supplies the hydrogen-containing gas discharged from each of the hydrogen generating devices to the hydrogen utilization device,
the switching unit includes a first hydrogen generating device outlet valve that opens and closes downstream of a branching point of the recycle passage in the hydrogen supply passage and a second hydrogen generating device outlet valve that opens and closes the recycle passage,
when the gas discharged from the hydrogen generating device is supplied to the hydrogen utilization device without being mixed in the raw material through the recycle passage, the first hydrogen generating device outlet valve is in an open state, and the second hydrogen generating device outlet valve is in a closed state, and
when the gas discharged from the hydrogen generating device is mixed in the raw material through the recycle passage without being supplied to the hydrogen utilization device, the first hydrogen generating device outlet valve is in the closed state, and the second hydrogen generating device outlet valve is in the open state.

12. A method for operating a hydrogen generating system in which a plurality of hydrogen generating devices are connected in parallel, each of the hydrogen generating devices including a reformer that generates a hydrogen-containing gas from a raw material and a raw material supply unit that supplies the raw material to the reformer,
each of the plurality of hydrogen generating devices including
a recycle passage through which the hydrogen-containing gas discharged from each of the plurality of hydrogen generating devices is mixed in the raw material supplied to the raw material supply unit, and
a switching unit that selectively switches between the supply of the hydrogen-containing gas discharged from each of the plurality of hydrogen generating devices to a hydrogen utilization device without being mixed in the fuel through the recycle passage and the mixing of the hydrogen-containing gas discharged from each of the plurality of hydrogen generating devices in the fuel through the recycle passage without being supplied to the hydrogen utilization device,
the method comprising mixing gas discharged by raw material purge from the hydrogen generating device that currently performs a stopping process among the plurality of hydrogen generating devices in the raw material using the switching unit.

13. The method for operating the hydrogen generating system according to claim 12, further comprising supplying, while at least one hydrogen generating device among the plurality of hydrogen generating devices mixes the gas discharged by the raw material purge during the stopping process in the raw material using the switching unit, the hydrogen-containing gas generated by the reformer to the hydrogen utilization device using the switching unit in at least another hydrogen generating device except for the at least one hydrogen generating device among the plurality of hydrogen generating devices.
